# EUROPÄISCHE PATENTANMELDUNG

(11) **EP 4 749 593 A1**
(43) Veröffentlichungstag der Anmeldung: **27.05.2026**
(21) Anmeldenummer: 25213181.8
(22) Anmeldetag: 04.11.2025
(51) Int. Cl.: G07B 15/02, G07B 15/04, G07F 17/24

(54) **PARKAUTOMAT FÜR EIN PARKSYSTEM**

(30) Priorität: 22.11.2024 DE 102024134382
(71) Anmelder: Scheidt & Bachmann GmbH, 41238 Mönchengladbach (DE)
(72) Erfinder: Möller, Bernd, 41238 Mönchengladbach (DE); Böhmer, Daniel, 45481 Mülheim (DE)
(74) Vertreter: Cohausz & Florack

(57) **Zusammenfassung**

Die Erfindung betrifft einen Parkautomat (100, 200, 300) für ein Parksystem (222, 322), umfassend mindestens eine Nutzerschnittstelle (108, 118, 208, 218, 308, 318), eingerichtet zum Empfangen einer Parkbezahlanfrage, enthaltend einen Parkdatensatz mit mindestens einer Parkvorgangskennung, mindestens ein Ablaufsteuerungsmodul (106, 206, 306), eingerichtet zum Steuern eines Bezahlvorgangs, basierend auf der empfangenen Parkbezahlanfrage, wobei der Bezahlvorgang zumindest ein Übertragen des Parkdatensatzes an eine entfernt von dem Parkautomaten (100, 200, 300) über eine erste Kommunikationsverbindung (116, 216, 316) verbundene Datenverarbeitungsvorrichtung (228, 328) umfasst, mindestens ein Detektionsmodul (110, 210, 310), eingerichtet zum Detektieren eines Ausführbarkeitsfehlers des Parkautomaten (100, 200, 300) bei der Ausführung der Parkbezahlanfrage, und mindestens ein Generierungsmodul (112, 212, 312), eingerichtet zumindest zum Bewirken eines Ausgebens eines durch ein mobiles Endgerät (246, 346) auslesbaren Kommunikationsdatensatzes, wenn ein Ausführbarkeitsfehlers des Parkautomaten (100, 200, 300) bei einer Ausführung der Parkbezahlanfrage detektiert wird, wobei der auslesbare Kommunikationsdatensatz mindestens ein Instruktionsdatum für das mobile Endgerät (246, 346) zum Ausführen des Bezahlvorgangs mit der Datenverarbeitungsvorrichtung (228, 328) und/oder einer mit der Datenverarbeitungsvorrichtung (228, 328) verbindbaren Rechenvorrichtung (380) unabhängig von dem Parkautomaten (100, 200, 300) enthält.

## Beschreibung

Die Erfindung betrifft einen Parkautomaten für ein Parksystem, umfassend mindestens eine Nutzerschnittstelle, eingerichtet zum Empfangen einer Parkbezahlanfrage (eines Nutzers), enthaltend einen Parkdatensatz mit mindestens einer Parkvorgangskennung, mindestens ein Ablaufsteuerungsmodul, eingerichtet zum Steuern eines Bezahlvorgangs (an dem Parkautomaten), basierend auf der empfangenen Parkbezahlanfrage, wobei der Bezahlvorgang zumindest ein Übertragen des Parkdatensatzes an eine entfernt von dem Parkautomaten über eine erste Kommunikationsverbindung verbundene Datenverarbeitungsvorrichtung umfasst. Darüber hinaus betrifft die Erfindung ein Parksystem, ein Verfahren und ein Computerprogramm.

Parksysteme mit mindestens einer Parkvorrichtung sind aus dem Stand der Technik bekannt. Eine Parkvorrichtung ist insbesondere ein Parkhaus oder ein Parkplatz für Fahrzeuge bzw. Autos. Derartige Parksysteme werden auch als Off-Street-Parking-Systeme bzw. -Anlagen bezeichnet.

Ein derartiges Parksystem verfügt in der Regel über eine oder mehrere Zufahrtsvorrichtung/en an einer entsprechenden Anzahl an Durchfahrten zu und/oder von einer Parkvorrichtung. Beispielsweise kann eine Zufahrtsvorrichtung mit einem Sperrmittel vorgesehen sein, wie eine Schranke mit einem schwenkbaren Schrankenbaum. Mit einer derartigen Zufahrtsvorrichtung wird insbesondere ein Durchfahren einer Durchfahrt, an der die Zufahrtsvorrichtung angeordnet ist, durch ein Fahrzeug von einem ersten Bereich in einen weiteren Bereich kontrolliert bzw. gesteuert.

So kann bei einem Parksystem mindestens eine Zufahrtsvorrichtung vorgesehen sein, um ein Durchfahren eines Fahrzeugs von einem nicht kontrollierten Bereich, beispielsweise einer (öffentlichen) Straße, in einen kontrollierten Bereich, beispielsweise den Parkbereich bzw. die Parkvorrichtung, zu steuern. Mit anderen Worten kann das Einfahren in die Parkvorrichtung durch eine Zufahrtsvorrichtung an einer Einfahrt des Parksystems gesteuert werden. Alternativ oder zusätzlich kann bei einem Parksystem mindestens eine Zufahrtsvorrichtung vorgesehen sein, um ein Durchfahren eines Fahrzeugs von dem kontrollierten Bereich in den nicht kontrollierten Bereich zu steuern. Mit anderen Worten kann ein Ausfahren eines Fahrzeugs an einer Ausfahrt aus der Parkvorrichtung durch eine Zufahrtsvorrichtung gesteuert werden.

An einer Ein- und/ oder Ausfahrt kann eine Zufahrtsvorrichtung mit Sperrelement, aber auch eine Zufahrtsvorrichtung ohne Sperrelement (auch als Free-flow-Anlage bzw. Free-flow Zufahrtsvorrichtung bezeichnet) angeordnet sein. Ein- und/ oder Ausfahrt können baulich getrennt sein, beispielsweise mit getrennten Fahrspuren für Ein- und Ausfahrt und jeweils getrennten Zufahrtsvorrichtung, oder kombiniert sein, beispielweise mit einer Ein- und Ausfahrt mit einer gemeinsamen Fahrspur und mit einer gemeinsamen Zufahrtsvorrichtung. Ferner können bei Ein- und/ oder Ausfahrt mehrere Fahrspuren in einer Richtung nebeneinander liegen, insbesondere mit und ohne bauliche Trennung der Fahrspuren.

Bei bekannten Zufahrtsvorrichtungen wird das Einfahren in eine Parkvorrichtung nach dem Erstellen eines Parktickets, wie eines Kurzparkertickets, durch ein Ticketausgabemodul aufgrund einer Nutzeraktion an dem Ticketausgabemodul gewährt. Das Kurzparkerticket, insbesondere ein Papierticket, kann dann am Ende einer Parkzeit bzw. Parkdauer von einem Nutzer an einem Parkautomaten bezahlt und an der Ausfahrt durch eine Validatorvorrichtung bzw. einen Validator der Zufahrtsvorrichtung überprüft werden. Bei einer positiven Prüfung wird ein Durchfahren der Durchfahrt (in diesem Fall die Ausfahrt) freigegeben. Stellt die Validatorvorrichtung jedoch fest, dass das Ticket beispielsweise noch nicht bezahlt wurde oder dass die Zahlung zu lange zurückliegt, so bleibt die Zufahrtsvorrichtung geschlossen, die Durchfahrt gesperrt. Mit anderen Worten, ein Durchfahren der Durchfahrt wird durch ein Freigabemodul blockiert.

Alternativ oder zusätzlich zum Erhalt eines Parktickets bei einem Einfahren in die Parkvorrichtung kann das Fahrzeugkennzeichen des einfahrenden Fahrzeugs erfasst und bestimmt werden. So kann an einer Durchfahrt (insbesondere an jeder Durchfahrt jeweils) eine Kennzeichenbestimmungseinrichtung vorgesehen sein, (jeweils) umfassend mindestens eine Kamera. Die mindestens eine Kamera einer Kennzeichenbestimmungseinrichtung ist eingerichtet zum Erfassen von Bilddaten eines Fahrzeugkennzeichens eines durch die entsprechende Durchfahrt durchgefahrenen bzw. fahrenden Fahrzeugs. Dies umfasst insbesondere das Erfassen der genannten Bilddaten vor einem Durchfahren der Durchfahrt.

Die Kennzeichenbestimmungseinrichtung kann die Kamera und ein mit der Kamera verbundenes Bildauswertemodul umfassen. Das Bildauswertemodul kann eingerichtet sein zum Bestimmen des Fahrzeugkennzeichens aus den erfassten Bilddaten. Ein solche Kennzeichenbestimmungseinrichtung (mit Kamera und Bildauswertemodul) wird auch als LPR (License Plate Recognition) Kennzeichenbestimmungseinrichtung bezeichnet. Bei einer LPR-Kennzeichenbestimmungseinrichtung wird das mittels der Kamera erfasste Bild des Fahrzeugkennzeichens durch das Bildauswertemodul insbesondere mittels OCR (Optical Character Recognition) ausgewertet, um das Fahrzeugkennzeichen zu ermitteln.

Insbesondere kann neben den Bilddaten durch die jeweilige Kennzeichenbestimmungseinrichtung auch der Durchfahrtzeitpunkt (insbesondere ein Einfahrtzeitpunkt oder ein Ausfahrtzeitpunkt) bestimmt werden. Eine (entfernt angeordnete) Datenverarbeitungsvorrichtung des Parksystems kann eingerichtet sein zum Auswerten der genannten Daten. Beispielsweise kann die Datenverarbeitungsvorrichtung eingerichtet sein zum Bestimmen der Parkdauer aus der Differenz von Ein- und Ausfahrzeitpunkt für dasselbe Fahrzeugkennzeichen bzw. dasselbe Fahrzeug. Zudem können, beispielsweise in einem Datenspeicher einer Datenverarbeitungsvorrichtung, Zufahrtsberechtigungen (z.B. Dauerparker-Berechtigungen) mit einem Fahrzeugkennzeichen verknüpft sein.

Wenn die Datenverarbeitungsvorrichtung ferner feststellt, dass für einen Kurzparker die Bezahlung der Parkgebühr vordem Ausfahren, insbesondere an einem Parkautomaten, erfolgt, kann das Fahrzeugkennzeichen genutzt werden, um bei dem Bezahlvorgang den Parkvorgang zu identifizieren, der bezahlt werden soll.

Falls für den Parkvorgang ein Parkticket genutzt wird, kann eine auslesbare Parkvorgangskennung, insbesondere in Form einer Parkticketkennung, auf dem Parkticket gespeichert sein. Der Einfahrtzeitpunkt (bzw. der Ausgabezeitpunkt des Parktickets) und die Parkvorgangskennung des ausgegebenen Parktickets können zusammen in der Datenverarbeitungsvorrichtung des Parksystem gespeichert werden. Falls für den Parkvorgang das Fahrzeugkennzeichen als Parkvorgangskennung erfasst und bestimmt wird, kann das Fahrzeugkennzeichen zusammen mit dem Erfassungszeitpunkt des Fahrzeugkennzeichens in einer Datenverarbeitungsvorrichtung des Parksystem gespeichert werden.

Um einen Parkvorgang zu bezahlen, kann an einem Parkautomaten (auch als Zahlterminal oder Kassenautomat bezeichnet) des Parksystems durch eine Nutzerschnittstelle des Parkautomaten eine Parkbezahlanfrage empfangen werden, enthaltend einen Parkdatensatz mit mindestens einer Parkvorgangskennung.

Wenn die Parkvorgangskennung beispielweise auf einem Parkticket gespeichert ist, kann die Nutzerschnittstelle eingerichtet sein zum Auslesen der Parkvorgangskennung eines Parktickets eines Nutzers. Über eine erste Kommunikationsverbindung kann der Parkautomat Daten mit der entfernt von dem Parkautomaten angeordneten Datenverarbeitungsvorrichtung austauschen und insbesondere mittels der empfangenen Parkvorgangskennung die zugehörige Einfahrtzeit und/oder die bereits durch die Datenverarbeitungsvorrichtung berechnete Parkgebühr abrufen.

Der Nutzer kann die Parkgebühr für den Parkvorgang mittels eines Bezahlmoduls an dem Parkautomaten bezahlen und nachfolgend die Parkvorrichtung an einer Ausfahrt mit seinem Fahrzeug verlassen. Dafür kann die Parkvorgangskennung in der Datenverarbeitungsvorrichtung als ausfahrtberechtigt gekennzeichnet und insbesondere gespeichert werden. Wie beschrieben wurde, kann an einer Ausfahrt eine Validatorvorrichtung angeordnet sein, die mit der Datenverarbeitungsvorrichtung kommunikativ verbunden sein kann. Eine durch die Validatorvorrichtung ausgelesene Parkvorgangskennung kann durch die Validatorvorrichtung mittels der kommunikativ verbundenen Datenverarbeitungsvorrichtung überprüft werden. Ist die Parkvorgangskennung als ausfahrtberechtigt gekennzeichnet, kann ein Ausfahren durch eine Zufahrtsvorrichtung freigegeben werden, wie beschrieben wurde.

Wenn die Parkvorgangskennung beispielsweise ein Fahrzeugkennzeichen ist, kann an dem Parkautomaten der Bezahlvorgang in analoger Weise durchgeführt werden: Der Nutzer kann an einem Parkautomaten über eine Nutzerschnittstelle eine Parkbezahlanfrage eingeben, enthaltend einen Parkdatensatz mit mindestens einer Parkvorgangskennung in Form seines Fahrzeugkennzeichens. Mit anderen Worten, die Nutzerschnittstelle empfängt zumindest die Parkvorgangskennung.

Dann kann in vorbeschriebener Weise anhand des an einer Einfahrt erfassten und in der Datenverarbeitungsvorrichtung gespeicherten Fahrzeugkennzeichens mit der entsprechenden Einfahrtzeit die Parkdauer und die Parkgebühr für den Parkvorgang berechnet werden. Anschließend kann das Fahrzeugkennzeichen als ausfahrtsberechtigt in der Datenverarbeitungsvorrichtung gespeichert werden. An der Ausfahrt der Parkvorrichtung kann das Fahrzeugkennzeichen durch eine Kennzeichenerfassungseinrichtung erfasst und bestimmt werden. Wenn festgestellt wird, dass das in der Datenverarbeitungsvorrichtung gespeicherte Fahrzeugkennzeichen als ausfahrtberechtigt gekennzeichnet ist, kann ein Ausfahren des Fahrzeugs freigeben werden.

Zudem sind im Stand der Technik Hybridsysteme im Einsatz, bei denen an der Einfahrt ein Ticket ausgegeben wird und das Fahrzeugkennzeichen erfasst und bestimmt wird. An einem Parkautomaten des Parksystems wird dann das Parkticket ausgelesen und der Bezahlvorgang wie oben beschrieben abgewickelt. An der Ausfahrt kann dann das Fahrzeugkennzeichen erkannt und die Zufahrtsvorrichtung freigegeben werden, insbesondere ohne erneutes Einlesen des Parktickets. Bei Problemen mit der Kennzeichenerkennung kann das Parkticket als Rückfalloption genutzt werden.

Nachteilig bei den beschriebenen Parksystemen ist, dass bei einem Ausführbarkeitsfehler des Parkautomaten bei dem Bezahlvorgang, beispielsweise aufgrund einer Kommunikationsunterbrechung zwischen dem Parkautomaten und der Datenverarbeitungsvorrichtung, eine Ausführung des Bezahlvorgangs nicht möglich ist. Ein Nutzer muss dann entweder auf einen anderen Parkautomaten ausweichen - sofern dieser überhaupt vorhanden ist - oder sich manuell durch vorgehaltenes Personal des Parksystembetreibers helfen lassen. Dies reduziert auf Seiten des Nutzers den Nutzerkomfort erheblich, da das Ausfahren sich verzögert und erschwert. Auf Seiten des Parksystembetreibers ist der Aufwand für das Vorhalten von zusätzlichen Parkautomaten und/oder Personal erhöht.

Somit liegt der Erfindung die Aufgabe zugrunde, eine Möglichkeit für Parksysteme bereitzustellen, mit der die Nachteile des Stands der Technik zumindest reduziert werden können und insbesondere der Nutzerkomfort in dem Parksystem verbessert und die Anzahl an notwendigen Parkautomaten des Parksystems reduziert werden können.

Die Aufgabe wird gemäß einem ersten Aspekt der Erfindung gelöst durch einen Parkautomaten nach Anspruch 1 für ein Parksystem, insbesondere für ein Parksystem nach Anspruch 10. Der Parkautomat umfasst mindestens eine Nutzerschnittstelle. Die Nutzerschnittstelle ist eingerichtet zum Empfangen einer Parkbezahlanfrage. Die Parkbezahlanfrage enthält einen Parkdatensatz mit mindestens einer Parkvorgangskennung. Der Parkautomat umfasst mindestens ein Ablaufsteuerungsmodul. Das Ablaufsteuerungsmodul ist eingerichtet zum Steuern, insbesondere Koordinieren, eines Bezahlvorgangs (an dem Parkautomaten), basierend auf der empfangenen Parkbezahlanfrage. Der Bezahlvorgang umfasst zumindest ein Übertragen des Parkdatensatzes an eine entfernt von dem Parkautomaten über eine erste Kommunikationsverbindung verbundene Datenverarbeitungsvorrichtung. Der Parkautomat umfasst mindestens ein Detektionsmodul. Das Detektionsmodul ist eingerichtet zum Detektieren eines Ausführbarkeitsfehlers des Parkautomaten bei einem Ausführen der Parkbezahlanfrage. Der Parkautomat umfasst mindestens ein Generierungsmodul. Das Generierungsmodul ist eingerichtet zumindest zum Bewirken eines Ausgebens eines durch ein mobiles Endgerät auslesbaren Kommunikationsdatensatzes (nur), wenn ein Ausführbarkeitsfehlers des Parkautomaten bei dem Ausführen der Parkbezahlanfrage detektiert wird. Der auslesbare Kommunikationsdatensatz enthält mindestens ein Instruktionsdatum für das mobile Endgerät zum Ausführen des Bezahlvorgangs mit der Datenverarbeitungsvorrichtung und/oder einer mit der Datenverarbeitungsvorrichtung verbindbaren Rechenvorrichtung unabhängig von dem Parkautomaten.

Ein weiterer Aspekt der Erfindung ist ein Parksystem nach Anspruch 10. Das Parksystem umfasst mindestens einen zuvor beschriebenen Parkautomaten (nach Anspruch 1). Das Parksystem umfasst eine über eine erste Kommunikationsverbindung mit dem Parkautomaten verbundene Datenverarbeitungsvorrichtung und/oder mindestens eine mit der Datenverarbeitungsvorrichtung verbindbare Rechenvorrichtung.

Im Gegensatz zum Stand der Technik wird erfindungsgemäß ein Parkautomat für ein Parksystem bereitgestellt, mit dem die Nachteile des Stands der Technik zumindest reduziert werden können und insbesondere der Nutzerkomfort in dem Parksystem verbessert und die Anzahl an notwendigen Parkautomaten des Parksystems (bzw. die Anzahl des notwendigen) reduziert werden, indem der Parkautomat eingerichtet ist zum Detektieren, dass ein Parkbezahlvorgang an dem Parkautomaten aufgrund eines Ausführbarkeitsfehlers des Parkautomaten (derzeit) nicht möglich ist, und zum nachfolgenden Verweisen auf eine alternative Möglichkeit zum Ausführen des Parkbezahlvorgangs unabhängig von dem Parkautomaten. Insbesondere wird einem Nutzer mit einem mobilen Endgerät an dem Parkautomaten eine Möglichkeit zum Bezahlen seines Parkvorgangs unabhängig von dem (defekten) Parkautomaten ermöglicht, indem der Nutzer anstelle des Parkautomaten sein mobiles Endgerät mittels des bereitgestellten und durch das mobile Endgerät auslesbaren Kommunikationsdatensatzes verwenden kann.

Das erfindungsgemäße Parksystem ist insbesondere ein Off-Street-Parking-System. Das Parksystem dient insbesondere dem (temporären) Parken von Fahrzeugen (insbesondere Personenkraftfahrzeugen bzw. Autos) in einer Parkvorrichtung. Das Parken eines Fahrzeugs in der Parkvorrichtung wird insbesondere als Parkvorgang bezeichnet. Vorzugsweise umfasst das Parksystem die Parkvorrichtung. Die Parkvorrichtung ist insbesondere ein Parkplatz mit einer Mehrzahl von Stellplätzen und/oder ein Parkhaus mit einer Mehrzahl von Stellplätzen.

Über eine Einfahrt des Parksystems, insbesondere der Parkvorrichtung, mit einem Einfahrtsbereich kann ein Fahrzeug in die Parkvorrichtung einfahren. Über eine Ausfahrt des Parksystems, insbesondere der Parkvorrichtung, mit einem Ausfahrtsbereich kann ein Fahrzeug aus der Parkvorrichtung ausfahren.

Ein- und/ oder Ausfahrt können baulich getrennt sein, beispielsweise mit getrennten Fahrspuren für Ein- und Ausfahrt und jeweils getrennter Zufahrtsvorrichtung, oder kombiniert sein, beispielweise mit einer Ein- und Ausfahrt mit einer gemeinsamen Fahrspur und mit einer gemeinsamen Zufahrtsvorrichtung. Ferner können bei Ein- und/ oder Ausfahrt mehrere Fahrspuren in einer Richtung nebeneinander liegen, insbesondere mit und ohne bauliche Trennung der Fahrspuren.

Gemäß einer Ausführungsform kann das Parksystem mindestens eine an einer Einfahrt angeordnete Zufahrtsvorrichtung umfassen, beispielsweise mit mindestens einem Parkticketausgabemodul. Das Parkticketausgabemodul kann eingerichtet sein zum Ausgeben eines Parktickets, insbesondere in Reaktion auf eine Detektion einer Nutzeraktion, wie einem Betätigen eines Eingabemittels des Parkticketausgabemoduls oder dergleichen.

Das Parkticket (z.B. ein Papierticket) kann eine Parkvorgangskennung insbesondere in Form einer Parkticketkennung umfassen. Eine Parkvorgangskennung identifiziert insbesondere in eindeutiger Weise (parksystemweit) einen Parkvorgang eines Fahrzeugs. Über eine (drahtlose und/oder drahtgebundene) Kommunikationsverbindung zwischen der Zufahrtsvorrichtung und einer (entfernt) angeordneten (zentralen) Datenverarbeitungsvorrichtung kann ein Einfahrtdatensatz an die Datenverarbeitungsvorrichtung übertragen werden. Der Einfahrtdatensatz kann zumindest die Parkvorgangskennung und insbesondere einen Einfahrtzeitpunkt (beispielsweise den Ausgabezeitpunkt des Parktickets) enthalten.

Alternativ oder zusätzlich kann das Parksystem mindestens eine Kennzeichenbestimmungseinrichtung umfassen. Vorzugsweise kann eine jeweilige Kennzeichenbestimmungseinrichtung eine LPR- Kennzeichenbestimmungseinrichtung sein. Eine Kennzeichenbestimmungseinrichtung umfasst insbesondere eine oder mehrere Kamera/s. Bei einer ersten Kennzeichenbestimmungseinrichtung kann die mindestens eine Kamera in bzw. an der Einfahrt angeordnet sein. Bei einer zweiten Kennzeichenbestimmungseinrichtung kann die mindestens eine Kamera in bzw. an der Ausfahrt angeordnet sein. Die jeweilige Kamera kann derart positioniert sein, dass Bilddaten von den Fahrzeugkennzeichen der jeweils durchfahrenden Fahrzeuge aufgenommen werden können, also derart, dass die jeweiligen Fahrzeuge das jeweilige Erfassungsfeld der jeweiligen Kamera passieren müssen.

Eine Kennzeichenbestimmungseinrichtung kann mindestens ein Bildauswertemodul umfassen. Beispielsweise kann jede Kennzeichenbestimmungseinrichtung über ein jeweiliges Bildauswertemodul verfügen oder zwei oder mehr Kennzeichenbestimmungseinrichtungen teilen sich ein gemeinsames Bildauswertemodul. Beispielsweise kann die Datenverarbeitungsvorrichtung das mindestens eine Bildauswertemodul umfassen.

Eine erste Kennzeichenbestimmungseinrichtung kann nach einem Erfassen und Bestimmen eines Fahrzeugkennzeichens eines einfahrenden Fahrzeugs über eine (drahtlose und/oder drahtgebundene) Kommunikationsverbindung einen Einfahrtdatensatz an ein Speichermodul der Datenverarbeitungsvorrichtung übertragen. Beispielsweise kann das Bildauswertemodul in die Kamera an der Einfahrt integriert sein, und der Einfahrtdatensatz, enthaltend zumindest eine Parkvorgangskennung in Form des bestimmten Fahrzeugkennzeichens und den Einfahrtzeitpunkt (insbesondere den genannten Erfassungszeitpunkt), kann über eine Kommunikationsverbindung von der Kamera an die Datenverarbeitungsvorrichtung übermittelt werden. In einem Speichermodul der Datenverarbeitungsvorrichtung kann der Einfahrtsdatensatz gespeichert werden.

Bei Varianten der Erfindung kann das Bildauswertemodul in die Datenverarbeitungsvorrichtung integriert sein und den Einfahrtdatensatz dem Speichermodul bereitstellen. Die Daten, die über die Kommunikationsverbindung übertragen an die Datenverarbeitungsvorrichtung werden, können die erfassten Bilddaten und beispielsweise die Erfassungszeit enthalten. Aus diesen Daten kann der Einfahrtdatensatz des einfahrenden Fahrzeugs generiert werden, enthaltend zumindest die Parkvorgangskennung in Form des bestimmten Fahrzeugkennzeichens und den Einfahrtzeitpunkt (insbesondere Erfassungszeitpunkt).

Vorzugsweise umfasst das Parksystem die (zentrale) Datenverarbeitungsvorrichtung. Die (zentrale) Datenverarbeitungsvorrichtung kann aus einem oder mehreren Rechner/n gebildet sein und mindestens einen Prozessor umfassen. Der mindestens eine Prozessor (zusammen mit Speichermittel und dergleichen) kann eingerichtet sein zum Ausführen und/oder Steuern von Softwaremodulen (z.B. Kommunikationsmodul, Parkdauerbestimmungsmodul, Bezahlungsmodul etc.).

Beispielsweise kann die Datenverarbeitungsvorrichtung durch mindestens einen lokalen Rechner, der an der Parkvorrichtung des Parksystems angeordnet ist, vorzugsweise jedoch durch mindestens ein entfernt von der Parkvorrichtung angeordnetes Hintergrundsystem gebildet sein. Das Hintergrundsystem kann vorzugsweise aus einem oder mehreren (verteilt angeordneten) Rechner/n (z.B. Server/n) und/oder einem Cloudsystem gebildet sein.

Insbesondere zusätzlich zu der Datenverarbeitungsvorrichtung kann das Parksystem bei einer Ausführungsform des Parksystems eine mit der Datenverarbeitungsvorrichtung kommunikativ verbindbare (entfernt von dem Parkautomaten) angeordnete Rechenvorrichtung umfassen. Die Rechenvorrichtung kann mindestens einen Prozessor umfassen. Der mindestens eine Prozessor (zusammen mit Speichermittel und dergleichen) kann eingerichtet sein zum Ausführen und/oder Steuern von Softwaremodulen (z.B. drittes Kommunikationsmodul, Bezahlungsmodul etc.).

Das Parksystem umfasst mindestens einen (stationären bzw. unbeweglich aufgestellten) Parkautomaten. Ein Parkautomat dient dem Einsatz in einem Parksystem und ist insbesondere benachbart zu einer Parkvorrichtung angeordnet. Ein Parkautomat ist insbesondere eingerichtet zum Ausführen eines Bezahlvorgangs für einen in dem Parksystem durchgeführten Parkvorgang anhand der diesem Parkvorgang (eindeutig) zugeordneten Parkvorgangskennung.

Der Parkautomat umfasst mindestens eine Nutzerschnittstelle. Beispielhafte und nicht abschließende Nutzerschnittstellen sind ein Parkticketlesemodul (eingerichtet zum Erfassen bzw. Auslesen zumindest der Parkvorgangskennung des Parktickets), ein Touchdisplay (eingerichtet zum Erfassen zumindest einer Nutzereingabe einer Parkvorgangskennung), eine Tastatur (eingerichtet zum Erfassen zumindest einer Nutzereingabe einer Parkvorgangskennung) etc. Es versteht sich, dass bei Varianten der Erfindung zwei oder mehr (unterschiedliche) Nutzerschnittstellen an dem Parkautomaten vorgesehen sein können.

Die mindestens eine Nutzerschnittstelle ist eingerichtet zum Empfangen einer Parkbezahlanfrage. Insbesondere kann die Nutzerschnittstelle eine Parkbezahlanfrage detektieren, beispielsweise durch ein Detektieren einer erfassten Parkvorgangskennung und/oder durch eine Nutzereingabe einer Parkvorgangskennung. Eine Parkbezahlanfrage enthält einen Parkdatensatz, der zumindest die Parkvorgangskennung enthält. Eine Parkbezahlanfrage enthält zumindest implizit eine Anfrage zum Bezahlen des Parkvorgangs, der der empfangenen Parkvorgangskennung zugeordnet ist.

Darüber hinaus umfasst der Parkautomat mindestens ein (insbesondere durch einen Prozessor des Parkautomaten ausführbares) Ablaufsteuerungsmodul. Das Ablaufsteuerungsmodul ist eingerichtet zum Steuern eines Bezahlvorgangs. Dies meint insbesondere, dass das Ablaufsteuerungsmodul die Ausführung der Teilschritte des Bezahlvorgangs durch den Parkautomaten steuert bzw. koordiniert. Das Steuern des Bezahlvorgangs erfolgt insbesondere in (unmittelbarer) Reaktion auf eine empfangene Parkbezahlanfrage. Das Steuern des Bezahlvorgangs umfasst zumindest ein Übertragen des empfangenen Parkdatensatzes, insbesondere durch ein Kommunikationsmodul des Parkautomaten, an die entfernt von dem Parkautomaten über eine erste (drahtlose und/oder drahtgebundene) Kommunikationsverbindung verbundene Datenverarbeitungsvorrichtung. Das Kommunikationsmodul kann durch das Ablaufsteuerungsmodul entsprechend gesteuert werden. Der übertragene Parkdatensatz kann zusätzlich zur Parkvorgangskennung zumindest eine Ausfahrtzeit bzw. einen Parkbeendigungszeitpunkt (insbesondere den Empfangszeitpunkt des Parkdatensatzes durch die erste Nutzerschnittstelle) enthalten. Alternativ kann der Parkbeendigungszeitpunkt beispielsweise der Empfangszeitung des Parkdatensatzes durch die Datenverarbeitungsvorrichtung sein.

Das Kommunikationsmodul des Parkautomaten kann eingerichtet sein zum Empfangen, als Antwort auf einen übertragenen Parkdatensatz, einer Angabe der für den Parkvorgang zu entrichtenden Parkgebühr. Alternativ kann der Parkautomat als Antwort auf einen übertragenen Parkdatensatz von der Datenverarbeitungsvorrichtung den zugehörigen Einfahrtzeitpunkt erhalten und insbesondere hieraus die Parkgebühr bestimmen.

Das Ablaufsteuerungsmodul kann eingerichtet sein zum Steuern eines Anzeigens der empfangenen bzw. bestimmten Parkgebühr, beispielsweise durch eine optische Anzeige des Parkautomaten. Ferner kann das Ablaufsteuerungsmodul den Bezahlvorgang der Parkgebühr steuern, beispielsweise ein Bezahlmodul des Parkautomaten (z.B. Kartenlesegerät, Bargeldzahlmodul etc.).

Nach einer Detektion einer (vollständigen) Bezahlung der Parkgebühr durch das Ablaufsteuerungsmodul kann das Ablaufsteuerungsmodul das Kommunikationsmodul des Parkautomaten steuern, derart, dass die zu diesem Parkvorgang zugehörige Parkvorgangskennung an die Datenverarbeitungsvorrichtung als ausfahrtsberechtigt gemeldet wird. Die Datenverarbeitungsvorrichtung (insbesondere das Speichermodul) kann die Parkvorgangskennung entsprechend kennzeichnen und speichern. Insbesondere in zuvor beschriebener Weise kann ein Ausfahren aus der Parkvorrichtung für diese Parkvorgangskennung freigegeben werden.

Erfindungsgemäß umfasst der Parkautomat mindestens ein Detektionsmodul. Das Detektionsmodul ist eingerichtet zum Detektieren eines Ausführbarkeitsfehlers des Parkautomaten bei einem Ausführen der Parkbezahlanfrage. Ein Ausführbarkeitsfehler des Parkautomaten bei einem Ausführen der Parkbezahlanfrage meint vorliegend insbesondere, dass eine Bezahlung eines Parkvorgangs an dem Parkautomaten (augenblicklich) nicht möglich ist. Insbesondere kann das Detektionsmodul eingerichtet zum Überwachen des jeweiligen Funktionszustands (sämtlicher) Module/Komponenten des Parkautomaten, die in einen Bezahlvorgang involviert sein können. Insbesondere kann das Detektionsmodul den jeweiligen Funktionszustand auswerten und bestimmen, ob eine Bezahlung eines Parkvorgangs an dem Parkautomaten (augenblicklich) möglich ist oder nicht.

Darüber hinaus umfasst der erfindungsgemäße Parkautomat ein Generierungsmodul. Das Generierungsmodul ist eingerichtet zumindest zum Bewirken eines Ausgebens eines durch ein mobiles Endgerät auslesbaren Kommunikationsdatensatzes, wenn, insbesondere nur dann, wenn ein Ausführbarkeitsfehlers des Parkautomaten bei einer Ausführung der Parkbezahlanfrage (durch das Detektionsmodul) detektiert wird. Ein Bewirken eines Ausgebens des auslesbaren Kommunikationsdatensatzes meint insbesondere, dass der Kommunikationsdatensatz an dem Parkautomaten derart (technisch) bereitgestellt wird, so dass dieser durch ein mobiles Endgerät an dem Parkautoamten auslesbar bzw. empfangbar ist.

Der auslesbare und insbesondere bereitgestellte Kommunikationsdatensatz enthält mindestens ein Instruktionsdatum für das mobile Endgerät. Das Instruktionsdatum, wenn es durch einen Prozessor des mobilen Endgeräts ausgeführt wird, bewirkt zumindest eine Initialisierung eines Bezahlvorgangs (für den Parkvorgang) mit der Datenverarbeitungsvorrichtung und/oder einer mit der Datenverarbeitungsvorrichtung kommunikativ verbindbaren Rechenvorrichtung unabhängig von dem Parkautomaten. Insbesondere bei einem Empfang des mindestens einen Instruktionsdatums kann durch den Prozessor des mobilen Endgeräts dieses Instruktionsdatum (automatisch oder nach einer Nutzerbestätigung) ausgeführt werden, so dass der Nutzer mittels seines mobilen Endgeräts eine zum dem Parkautomaten mit den Ausführbarkeitsfehler alternative Bezahlmethode für seinen Parkvorgang erhält. Dies ermöglicht in nutzerkomfortabler und aufwandsarmer Weise ein Bezahlen des Parkvorgangs auch bei einem defekten Parkautomaten.

Gemäß einer bevorzugten Ausführungsform des erfindungsgemäßen Parkautomaten kann das Generierungsmodul eingerichtet sein zum Generieren (als Kommunikationsdatensatz) eines grafischen Codes, enthaltend das mindestens eine Instruktionsdatum. Der mindestens eine grafische Code kann insbesondere ein Barcode und/oder ein QR-Code sein. Als (codierten) Dateninhalt kann der grafische Code insbesondere das mindestens eine Instruktionsdatum enthalten.

Vorzugsweise kann das Generierungsmodul eingerichtet sein zum Bewirken eines Ausgebens des Kommunikationsdatensatzes durch ein Bewirken eines Anzeigens des grafischen Codes auf einer optischen Anzeige des Parkautomaten. Der Parkautomat kann insbesondere mindestens eine optische Anzeige bzw. ein Display umfassen. Beispielsweise kann die optische Anzeige ein Touchdisplay sein, das auch als zuvor beschriebene Nutzerschnittstelle verwendet werden kann. Der auf der optischen Anzeige angezeigte grafische Code kann durch ein mobiles Endgerät erfasst werden, insbesondere durch einen optischen Sensor, wie eine Kamera, des mobilen Endgeräts. Ferner kann der Dateninhalt des grafischen Codes extrahiert und insbesondere durch einen Prozessor des mobilen Endgeräts verarbeitet werden. In einfacher Weise kann das mindestens eine Instruktionsdatum übertragen werden.

Das Generierungsmodul kann vorzugsweise ferner eingerichtet sein zum Bewirken eines Anzeigens einer Aufforderung bzw. eines Nutzerhinweises zum Erfassen des grafischen Codes auf der optischen Anzeige des Parkautomaten. Insbesondere kann sowohl der grafische Code als auch die Aufforderung auf der optischen Anzeige des Parkautomaten angezeigt werden, bewirkt durch das Generierungsmodul. Beispielsweise kann als Aufforderung ein Schriftzug (z.B. "Der Parkautomat ist defekt. Bitte scannen Sie den angezeigten Code ein, um den Bezahlvorgang vorzunehmen") auf der optischen Anzeige angezeigt werden.

Alternativ oder zusätzlich kann, gemäß einer weiteren Ausführungsform des erfindungsgemäßen Parkautomaten, das Generierungsmodul eingerichtet sein zum Generieren (als Kommunikationsdatensatz) eines über eine Nahfeldschnittstelle des Parkautomaten übertragbaren Übertragungscode, enthaltend das mindestens eine Instruktionsdatum. Die mindestens eine Nahfeldschnittstelle kann eine Reichweite zwischen 0 und 15 m aufweisen, beispielsweise zwischen 0 und ca. 5 m. Bevorzugte und nicht abschließende Nahfeldschnittstellen sind eine Bluetooth-Schnittstelle und eine NFC-Schnittstelle. Dies ermöglicht ein (besonders einfaches) Erfassen des Instruktionsdatums durch das mobile Endgerät an dem Parkautomaten.

Insbesondere kann das durch eine Bluetooth-Schnittstelle ausgesendete Signal, enthaltend als Dateninhalt zumindest einen Übertragungscode mit dem mindestens einen Instruktionsdatum, ein Advertising-Signal sein. Ein Advertising-Signal ist insbesondere ein durch nahezu alle erwerbbaren mobilen Endgeräte empfangbares und auswertbares Signal.

Das Generierungsmodul kann vorzugsweise eingerichtet sein zum Bewirken eines Ausgebens des Kommunikationsdatensatzes durch ein Bewirken eines (zumindest nahezu kontinuierlichen) Aussendens und/oder Bereitstellens des Übertragungscodes über die Nahfeldschnittstelle. Insbesondere kann ein ausgesendetes Signal, enthaltend den Übertragungscode, durch ein mobiles Endgerät empfangen werden. Bei einem einer NFC-Schnittstelle kann ein Annähern des mobilen Endgeräts an die NFC-Schnittstelle erforderlich sein zum Empfangen des Übertragungscodes. Es versteht sich, dass zwei oder mehr Nahfeldschnittstellen vorgesehen sein können.

Gemäß einer besonders bevorzugten Ausführungsform des erfindungsgemäßen Parkautomaten kann das Generierungsmodul eingerichtet sein zum Generieren eines dynamischen grafischen Codes und/oder eines dynamischen Übertragungscodes. Mit anderen Worten, ein Code mit einem variierenden Dateninhalt kann generiert werden. Der Dateninhalt des Codes kann beispielweise zeitlich begrenzt gültig sein und nach Ablauf der einer (einstellbaren) Zeit durch einen nächsten Code mit einem weiteren, geänderten Dateninhalt ersetzt werden. Hierdurch kann insbesondere die Manipulationssicherheit, beispielsweise gegen Missbrauch von abfotografierten grafischen Codes, verbessert werden.

Gemäß einer weiteren bevorzugten Ausführungsform des erfindungsgemäßen Parkautomaten kann das Detektionsmodul eingerichtet sein zum Überwachen der ersten Kommunikationsverbindung. Insbesondere kann das Detektionsmodul eingerichtet sein zum Überwachen des Funktionszustands der ersten Kommunikationsverbindung. Dies meint insbesondere, dass das Detektionsmodul detektieren kann, ob die erste Kommunikationsverbindung funktionsfähig ist oder nicht, also eine Kommunikationsunterbrechung vorliegt. Vorzugsweise kann das Detektionsmodul eingerichtet sein zum Detektieren eines Ausführbarkeitsfehlers des Parkautomaten, sobald durch das Überwachen der ersten Kommunikationsverbindung eine Kommunikationsunterbrechung mit der Datenverarbeitungsvorrichtung festgestellt wird. Insbesondere kann bei einer Kommunikationsunterbrechung (schon) ein Parkdatensatz nicht durch den Parkautomaten an die Datenverarbeitungsvorrichtung über die erste Kommunikationsverbindung übertragen werden. Demnach kann an dem Parkautomaten selbst ein Bezahlvorgang für einen Parkvorgang (während der Kommunikationsunterbrechung) nicht durchgeführt werden (da zumindest der zugehörige Einfahrtzeitpunkt dem Parkautomaten nicht bekannt ist). Indem der Zustand der ersten Kommunikationsverbindung überwacht wird und bei Detektion einer Kommunikationsunterbrechung eine alternative Bezahlmöglichkeit durch einen ausgegebenen Kommunikationsdatensatz bereitgestellt wird, kann auch bei einer Kommunikationsunterbrechung zwischen Parkautomat und Datenverarbeitungsvorrichtung der Nutzer die Parkgebührenberechnung für einen Parkvorgang selbständig veranlassen und einen Bezahlvorgang durchführen.

Gemäß einer bevorzugten Ausführungsform des erfindungsgemäßen Parkautomaten kann das Detektionsmodul eingerichtet sein zum Überwachen der ersten Kommunikationsverbindung durch Überwachen der über die erste Kommunikationsverbindung durch den Parkautomaten von der Datenverarbeitungsvorrichtung empfangenen Datenprotokolldaten und/oder Betriebsdaten. Insbesondere ist festgestellt worden, dass über die erste Kommunikationsverbindung zwischen Parkautomaten und Datenverarbeitungsvorrichtung regelmäßig und/oder zu bestimmten Zeitpunkten Datenprotokolldaten und/oder Betriebsdaten ausgetauscht werden. Insbesondere kann die erste Kommunikationsverbindung eine TCP/IP-Netzwerk-Verbindung sein. Bei einer derartigen Kommunikationsverbindung werden zwischen zwei verbundenen Kommunikationsmodulen Datenprotokolldaten und/oder Betriebsdaten regelmäßig und/oder zu bestimmten Zeitpunkten ausgetauscht.

Vorzugsweise kann das Detektionsmodul eingerichtet sein zum Feststellen einer Kommunikationsunterbrechung, wenn für eine vordefinierte Zeitdauer (z.B. zwischen 1 s und 60 s) kein Empfang von Datenprotokolldaten und/oder Betriebsdaten an dem Kommunikationsmodul des Parkautomaten detektiert wird.

Gemäß einer weiteren bevorzugten Ausführungsform des erfindungsgemäßen Parkautomaten kann das Detektionsmodul eingerichtet sein zum Überwachen mindestens eines in den Bezahlvorgang involvierten Bezahlmoduls des Parkautomaten. Ein in den Bezahlvorgang involviertes Bezahlmodul meint ein Hardwaremodul und/oder Softwaremodul des Parkautomaten, das für eine Durchführung eines Bezahlvorgangs an dem Parkautomaten (zwingend) erforderlich ist.

Das Detektionsmodul kann vorzugsweise eingerichtet sein zum Detektieren eines Ausführbarkeitsfehlers des Parkautomaten, wenn durch das Überwachen des mindestens einen Bezahlmoduls festgestellt wird, dass der Bezahlvorgang an dem Parkautomaten nicht ausführbar ist.

Gemäß einer weiteren Ausführungsform des erfindungsgemäßen Parkautomaten kann das mindestens eine Bezahlmodul ein Bargeldzahlmodul sein. Das Detektionsmodul kann eingerichtet sein zum Überwachen des Zustands des Bargeldzahlmoduls. Beispielsweise kann durch das Detektionsmodul die Münz- und/oder Geldscheinkasse des Bargeldbezahlmoduls überwacht werden. Wenn beispielsweise detektiert wird, dass die Münz- und/oder Geldscheinkasse voll ist, kann ein Ausführbarkeitsfehler detektiert werden. Auch kann beispielsweise ein Ausführbarkeitsfehler durch das Detektionsmodul detektiert werden, wenn kein Wechselgeld mehr in der Münz- und/oder Geldscheinkasse vorhanden ist.

Alternativ oder zusätzlich kann das mindestens eine Bezahlmodul ein Kartenlesegerät sein. Das Detektionsmodul kann eingerichtet sein zum Überwachen des Zustands des Kartenlesegeräts. Insbesondere kann das Detektionsmodul feststellen, ob das Kartenlesegerät defekt ist oder nicht. Für den Fall eines defekten Zustands kann ein Ausführbarkeitsfehler des Parkautomaten detektiert werden.

Gemäß einer weiteren Ausführungsform des erfindungsgemäßen Parkautomaten kann das Detektionsmodul eingerichtet sein zum Überwachen mindestens einer Nutzerschnittstelle des Parkautomaten. Das Detektionsmodul kann eingerichtet sein zum Detektieren eines Ausführbarkeitsfehlers des Parkautomaten, wenn durch das Überwachen der mindestens einen Nutzerschnittstelle festgestellt wird, dass ein Bezahlvorgang an dem Parkautomaten nicht ausführbar ist.

Gemäß einer weiteren Ausführungsform des erfindungsgemäßen Parkautomaten kann die mindestens eine Nutzerschnittstelle ein Parkticket-Leser sein. Das Detektionsmodul kann eingerichtet sein zum Überwachen des Zustands des Parkticket-Lesers. Alternativ oder zusätzlich kann die mindestens eine Nutzerschnittstelle ein Touch-Display sein. Das Detektionsmodul kann eingerichtet sein zum Überwachen des Zustands des Touch-Displays. Alternativ oder zusätzlich kann die mindestens eine Nutzerschnittstelle eine Tastatur sein. Das Detektionsmodul kann eingerichtet sein zum Überwachen des Zustands der Tastatur.

Bei einer Variante der Erfindung kann es erforderlich sein, dass das Generierungsmodul nur dann ein Ausgeben eines Kommunikationsdatensatzes bewirkt, wenn an dem Bezahlautomaten ein Bezahlvorgang in keiner Weise durchführbar ist. Beispielsweise kann ein Parkautomat zwei Bezahlmodule umfassen, die alternativ zueinander für die Durchführung eines Bezahlvorgangs an dem Parkautomaten verwendet werden können, wie ein Kartenlesegerät und ein Bargeldzahlmodul. Gemäß einer Ausführungsform kann das Generierungsmodul eingerichtet sein zumindest zum Bewirken eines Ausgebens eines durch ein mobiles Endgerät auslesbaren Kommunikationsdatensatzes (nur dann), wenn ein Ausführbarkeitsfehlers des Parkautomaten bei einem Ausführen der Parkbezahlanfrage detektiert wird, der eine jegliche Durchführung des Bezahlvorgangs an dem Parkautomaten verhindert. Wenn beispielsweise der Parkautomat über genau ein Kartenlesegerät und genau ein Bargeldzahlmodul verfügt, müssen sowohl das Kartenlesegerät als auch das Bargeldzahlmodul jeweils in einem Zustand sein, der einen Betrieb des jeweiligen Moduls nicht erlaubt.

Bei weiteren Varianten der Erfindung kann das das Generierungsmodul eingerichtet sein zumindest zum Bewirken eines Ausgebens eines durch ein mobiles Endgerät auslesbaren Kommunikationsdatensatzes, wenn ein Ausführbarkeitsfehlers des Parkautomaten bei einer Ausführung der Parkbezahlanfrage detektiert wird, der eine Durchführung einer Bezahlvorgangsalternative an dem Parkautomaten verhindert. In dem obigen Beispiel kann beispielsweise ein Bezahlen mit einem kartenbasieren Bezahlmittel aufgrund einer Störung des Kartenlesegeräts nicht möglich sein, jedoch das Bargeldzahlmodul funktionsfähig. Dennoch kann in dieser Variante dem Nutzer der Kommunikationsdatensatz bereitgestellt werden.

Weitere durch das Detektionsmodul überwachbare beispielhafte und nicht abschließende Bezahlmodule des Parkautomaten sind das mindestens ein Ablaufsteuerungsmodul und die mindestens eine Nutzerschnittstelle. Beispielsweise kann mindestens Nutzerschnittstelle eine Störung aufweisen, wie z.B. einen defekten Parkticket-Leser, einen defektes Touchdisplay oder eine defekte Tastatur.

Gemäß einer besonders bevorzugten Ausführungsform des erfindungsgemäßen Parkautomaten kann der Kommunikationsdatensatz als Instruktionsdatum zumindest eine Netzwerkadresse der Datenverarbeitungsvorrichtung und/oder eine Netzwerkadresse der Rechenvorrichtung umfassen, derart, dass durch das mobile Endgerät über eine zweite Kommunikationsverbindung eine Datenverbindung zwischen dem mobilen Endgerät und der Datenverarbeitungsvorrichtung und/oder der Rechenvorrichtung herstellbar ist. Die zweite Kommunikationsverbindung kann sich von der ersten Kommunikationsverbindung unterscheiden.

Vorzugsweise kann die Netzwerkadresse eine Webadresse sein. Beispielsweise kann im Falle eines Barcodes oder QR-Code dieser als Dateninhalt eine Webadresse (URL) enthalten. Das mobile Endgerät kann den Dateninhalt extrahieren und, beispielsweise nach einer Nutzerbestätigung, durch einen aufgrund des durch den Prozessor ausgeführten Instruktionsdatums gestarteten Webbrowser des mobilen Endgeräts die genannte Webadresse der Datenverarbeitungsvorrichtung oder der mit der Datenverarbeitungsvorrichtung verbindbaren Rechenvorrichtung aufrufen. Wie noch beschrieben wird, kann die aufgerufene Webseite bzw. die entsprechende Vorrichtung eine alternative Bezahlmethode anbieten. Indem eine andere Kommunikationsverbindung (beispielsweise eine Mobilfunkverbindung) zwischen mobilem Endgerät und Datenverarbeitungsvorrichtung oder Rechenvorrichtung als zwischen Parkautomat und Datenverarbeitungsvorrichtung verwendet wird hergestellt wird, kann bei auch bei einer Kommunikationsunterbrechung der ersten Kommunikationsverbindung ein Bezahlvorgang durch den Nutzer durchgeführt werden.

Gemäß einer bevorzugten Ausführungsform des erfindungsgemäßen Parksystems kann die Datenverarbeitungsvorrichtung mindestens ein Speichermodul umfassen, eingerichtet zum Empfangen eines Einfahrtdatensatzes, enthaltend zumindest mindestens eine Parkvorgangskennung und einen Einfahrtzeitpunkt eines Fahrzeugs, wie insbesondere bereits beschrieben wurde. Beispielsweise kann die Datenverarbeitungsvorrichtung ein erstes (durch einen Prozessor der Datenverarbeitungsvorrichtung steuerbares) Kommunikationsmodul umfassen. Das erste Kommunikationsmodul kann eingerichtet sein zum Empfangen eines Einfahrtdatensatzes, enthaltend zumindest mindestens eine Parkvorgangskennung (z.B. Parkticketkennung) und einen Einfahrtzeitpunkt eines Fahrzeugs, wie insbesondere bereits beschrieben wurde. Das Kommunikationsmodul kann den Einfahrtdatensatz dem Speichermodul bereitstellen. Bei anderen Varianten der Erfindung kann beispielsweise das Bildauswertemodul den Einfahrtdatensatz dem Speichermodul bereitstellen.

Das mindestens eine Speichermodul kann eingerichtet sein zum Speichern des empfangenen Einfahrtdatensatzes in einer Datenbank des Parksystems, insbesondere der Datenverarbeitungsvorrichtung. Insbesondere können sämtliche empfangenen Einfahrtdatensätze in der Datenbank gespeichert werden.

Das mindestens eine erste Kommunikationsmodul kann eingerichtet sein zum Empfangen des Parkdatensatzes, wie insbesondere bereits beschrieben wurde. Das erste Kommunikationsmodul ist insbesondere für eine Kommunikation über die erste Kommunikationsverbindung eingerichtet.

Gemäß einer weiteren bevorzugten Ausführungsform des erfindungsgemäßen Parksystems kann die Datenverarbeitungsvorrichtung mindestens ein zweites (durch einen Prozessor der Datenverarbeitungsvorrichtung steuerbares) Kommunikationsmodul umfassen. Das zweite Kommunikationsmodul kann eingerichtet sein zum Empfangen eines Endgerätedatensatzes von einem mobilen Endgerät, enthaltend zumindest eine Parkvorgangskennung. Das zweite Kommunikationsmodul ist insbesondere für eine Kommunikation über die zweite Kommunikationsverbindung eingerichtet.

Alternativ oder zusätzlich kann die mit der Datenverarbeitungsvorrichtung verbindbare Rechenvorrichtung mindestens ein drittes (durch einen Prozessor der Rechenvorrichtung steuerbares) Kommunikationsmodul umfassen. Das dritte Kommunikationsmodul kann eingerichtet sein zum Empfangen eines Endgerätedatensatzes von einem mobilen Endgerät, enthaltend zumindest eine Parkvorgangskennung. Das dritte Kommunikationsmodul ist insbesondere für eine Kommunikation über die zweite Kommunikationsverbindung eingerichtet.

Gemäß einer weiteren bevorzugten Ausführungsform des erfindungsgemäßen Parksystems kann die Datenverarbeitungsvorrichtung mindestens ein Parkdauerbestimmungsmodul umfassen. Das Parkdauerbestimmungsmodul kann eingerichtet sein zum Bestimmen der Parkdauer eines Parkvorgangs, basierend auf dem Parkbeendigungszeitpunkt eines empfangenen Endgerätedatensatzes und einem Einfahrtzeitpunkt eines gespeicherten Einfahrtdatensatzes, wobei der Einfahrtdatensatz aus der Mehrzahl von gespeicherten Einfahrtdatensätze anhand der jeweiligen Parkvorgangskennung dem empfangenen Endgerätedatensatz zuordenbar ist. Der Parkbeendigungszeitpunkt eines empfangenen Endgerätedatensatzes kann insbesondere der Empfangszeitpunkt des Endgerätedatensatzes durch die Datenverarbeitungsvorrichtung (oder der Rechenvorrichtung) sein. Es versteht sich, dass es auch der Aussendezeitpunkt des Endgerätedatensatzes sein kann.

Insbesondere kann, beispielsweise durch das Parkdauerbestimmungsmodul, bei einem Empfang eines Endgerätedatensatzes der Einfahrtdatensatz aus der Mehrzahl von gespeicherten Einfahrtdatensätzen identifiziert werden, der die gleiche Parkvorgangskennung wie der empfangene Endgerätedatensatz enthält. Dann kann die Parkdauer anhand des Einfahrtzeitpunkts und des Parkbeendigungszeitpunkts bestimmt werden. Beispielsweise kann das Parkdauerbestimmungsmodul eingerichtet sein zum Bestimmen der Parkdauer aus der Differenz von Einfahrt- und Parkbeendigungszeitpunkt für dieselbe Parkvorgangskennung (z.B. Fahrzeugkennzeichen oder Parkticketkennung) bzw. dasselbe Fahrzeug.

Vorzugsweise kann das Parkdauerbestimmungsmodul ferner eingerichtet sein zum Bestimmen der Parkdauer eines Parkvorgangs, basierend auf dem Parkbeendigungszeitpunkt eines empfangenen Parkdatensatzes und einem Einfahrtzeitpunkts eines gespeicherten Einfahrtdatensatzes, wobei der Einfahrtdatensatz aus der Mehrzahl von gespeicherten Einfahrtdatensätzen anhand der jeweiligen Parkvorgangskennung dem empfangenen Parkdatensatzes zuordenbar ist, insbesondere in analoger Weise zu dem zuvor beschriebenen Vorgang bei einem Empfang eines Endgerätedatensatzes.

Bei Varianten der Erfindung kann die Rechenvorrichtung mindestens ein Parkdauerbestimmungsmodul umfassen, eingerichtet zum Bestimmen der Parkdauer eines Parkvorgangs, basierend auf dem Parkbeendigungszeitpunkt eines empfangenen Endgerätedatensatzes und einem Einfahrtzeitpunkts eines gespeicherten Einfahrtdatensatzes, wobei der Einfahrtdatensatz aus der Mehrzahl von gespeicherten Einfahrtdatensätze anhand der jeweiligen Parkvorgangskennung dem empfangenen Endgerätedatensatz zuordenbar ist.

Gemäß einem weiteren Ausführungsbeispiel des erfindungsgemäßen Parksystems kann die Datenverarbeitungsvorrichtung mindestens ein Parkgebührbestimmungsmodul umfassen. Das Parkgebührbestimmungsmodul kann eingerichtet sein zum Bestimmen der Parkgebühr eines Parkvorgangs, basierend auf der bestimmten Parkdauer des Parkvorgangs und mindestens einem Tarifdatum. Bei Varianten der Erfindung kann die Rechenvorrichtung ein Parkgebührbestimmungsmodul umfassen. Eine bestimmte Parkdauer kann dem Parkgebührbestimmungsmodul bereitgestellt werden.

Das zweite (bzw. dritte Kommunikationsmodul) kann eingerichtet sein zum Übertragen der bestimmten Parkgebühr an das mobile Endgerät. Das erste Kommunikationsmodul kann eingerichtet sein zum Übertragen der bestimmten Parkgebühr an den Parkautomaten.

Gemäß einer weiteren Ausführungsform kann die Datenverarbeitungsvorrichtung und/oder die Rechenvorrichtung ein Bezahlungsmodul umfassen, eingerichtet zum Ermöglichen einer Bezahlung der bestimmten Parkgebühr mittels des mobilen Endgeräts. Das Bezahlungsmodul kann insbesondere ermöglichen, dass ein Nutzer seine Parkgebühr bargeldlos über Eingabe eines Zahlungsmittels z.B. Kreditkarte, PayPal oder per SEPA-Einzug mittels seines mobilen Endgeräts bezahlen kann.

Gemäß einer weiteren Ausführungsform des erfindungsgemäßen Parksystems kann nach einer detektierten Bezahlung des Parkvorgangs (in zuvor beschriebener Weise) die Parkvorgangskennung als ausfahrtberichtigt gekennzeichnet werden, beispielsweise durch das Speichermodul. Beispielsweise kann vorgegebenen sein, dass das Fahrzeug, das der ausfahrtberichtigten Parkvorgangskennung zugeordnet ist, innerhalb einer vordefinierten Zeitdauer (z.B. zwischen 10 und 15 Minuten) die Parkvorrichtung in (in zuvor beschriebener Weise) verlassen kann.

Ferner kann das Parksystem das mindestens eine mobile Endgerät umfassen. Das mobile Endgerät ist insbesondere ein netzwerkfähiges mobiles Endgerät. Beispielhafte und nicht abschließende mobile Endgeräte sind Smartphones, Tablet-Computer, mobile Spielkonsolen, Laptops, Netbooks, Datenbrillen, Smart-Watches und ähnliche Wearables. Alternativ kann ein mobiles Endgerät ein dediziertes Parkticketing-Gerät sein, das ausschließlich für eine Parkanwendung ausgelegt ist.

Ein weiterer Aspekt der Erfindung ist ein Verfahren, insbesondere ein computerimplementiertes Verfahren, zum Betreiben eines Parkautomaten, insbesondere eines zuvor beschriebenen Parkautomaten (nach Anspruch 1) (insbesondere in einem zuvor beschriebenen Parksystem (nach Anspruch 10)). Das Verfahren umfasst:
- Detektieren, durch mindestens ein Detektionsmodul des Parkautomaten, eines Ausführbarkeitsfehlers des Parkautomaten bei einem Ausführen von Parkbezahlanfragen, und
- Bewirken, durch mindestens ein Generierungsmodul des Parkautomaten, eines Ausgebens eines durch ein mobiles Endgerät auslesbaren Kommunikationsdatensatzes, wenn ein Ausführbarkeitsfehlers des Parkautomaten bei dem Ausführen der Parkbezahlanfrage detektiert wird,
- wobei der auslesbare Kommunikationsdatensatz mindestens ein Instruktionsdatum für das mobile Endgerät zum Ausführen eines Bezahlvorgangs mit einer Datenverarbeitungsvorrichtung und/oder mit einer mit der Datenverarbeitungsvorrichtung verbindbaren Rechenvorrichtung unabhängig von dem Parkautomaten enthält.

Ein noch weiterer Aspekt der Erfindung ist ein Computerprogramm, umfassend Befehle, die bei der Ausführung des Computerprogramms durch mindestens einen Prozessor eines Parkautomaten diesen veranlassen, das zuvor beschriebene Verfahren (nach Anspruch 15) auszuführen und/oder zu steuern.

Das Computerprogramm, insbesondere die Instruktionen bzw. Programmanweisungen, können in einem Computerprogrammprodukt gespeichert sein, insbesondere einem Programmspeicher. Zum Beispiel ist ein Programmspeicher ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher.

Zusätzlich kann ein Parkautomat einen Hauptspeicher aufweisen, zum Beispiel einen flüchtigen oder nicht-flüchtigen Speicher, insbesondere einen Speicher mit wahlfreiem-Zugriff (RAM), wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM). Der mindestens eine Prozessor des Parkautomaten kann beispielsweise Zwischenergebnisse oder Ähnliches in dem Hauptspeicher speichern.

Die zuvor beschriebenen Module (z.B. Empfangsmodul, Generierungsmodul, Detektionsmodul etc.) sind vorzugsweise zumindest teilweise Softwareelemente (z.B. ausführbarer Code) und können von einem Prozessor des Parkautomaten ausgeführt werden. Es sei ferner angemerkt, dass Begriffe, wie "erste"; "zweite" etc. nicht eine Reihenfolge angeben, sondern insbesondere zur Unterscheidung zweier Elemente (z.B. Kommunikationsmodul etc.) dienen.

Die Merkmale der Parkautomaten, Parksysteme, Verfahren und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, den erfindungsgemäßen Parkautomaten, das erfindungsgemäße Verfahren, das erfindungsgemäße Computerprogramm und das erfindungsgemäße Parksystem auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Parkautomaten gemäß der Erfindung,
- Fig. 2: eine schematische Ansicht eines Ausführungsbeispiels eines Parksystems gemäß der Erfindung mit einem Ausführungsbeispiel eines Parkautomaten gemäß der Erfindung,
- Fig. 3: eine schematische Ansicht eines weiteren Ausführungsbeispiels eines Parksystems gemäß der Erfindung mit einem Ausführungsbeispiel eines Parkautomaten gemäß der Erfindung,
- Fig. 4: ein Diagramm eines Ausführungsbeispiels eines Verfahrens gemäß der Erfindung,
- Fig. 5a: eine beispielhafte Displayanzeige eines Ausführungsbeispiels eines Parkautomaten gemäß der Erfindung,
- Fig. 5b: eine beispielhafte Displayanzeige eines mobilen Endgeräts gemäß der Erfindung,
- Fig. 5c: eine weitere beispielhafte Displayanzeige eines mobilen Endgeräts gemäß der Erfindung, und
- Fig. 5d: eine weitere beispielhafte Displayanzeige eines mobilen Endgeräts gemäß der Erfindung.

Nachfolgend werden für ähnliche Elemente ähnliche Bezugszeichen verwendet.

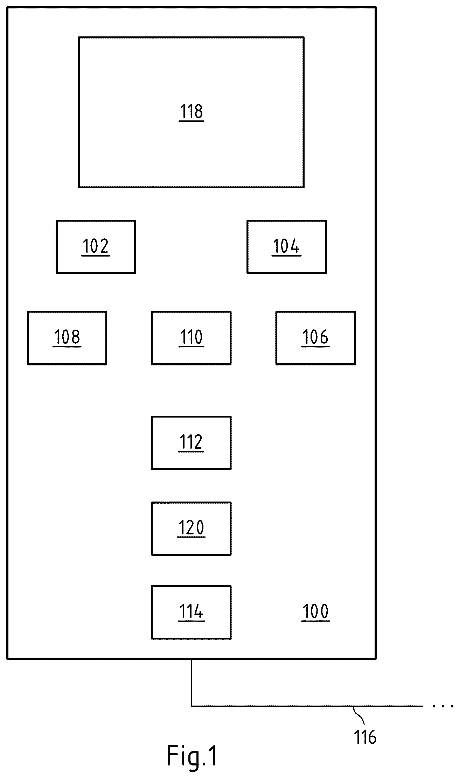

Die Figur 1 zeigt ein Ausführungsbeispiel eines (stationären) Parkautomaten 100 für ein Parksystem. Der Parkautomat 100 ist insbesondere Bestandteil des (nicht gezeigten) Parksystems. Der Parkautomat 100 ist insbesondere eingerichtet zum Ermöglichen eines Durchführens eines Bezahlvorgangs für einen in dem Parksystem durchgeführten Parkvorgang.

Der Parkautomat 100 kann zumindest einen Prozessor 102 und ein Speichermittel 104 umfassen, eingerichtet zum Ausführen und/oder Steuern von Software- und/oder Hardwaremodulen des Parkautomaten, wie die Module 106 bis 120.

Der Parkautomat 100 umfasst mindestens eine Nutzerschnittstelle 108, 118, eingerichtet zum Empfangen einer Parkbezahlanfrage, enthaltend einen Parkdatensatz mit mindestens einer Parkvorgangskennung.

Vorliegend sind beispielhaft zwei Nutzerschnittstellen 108, 118 vorgesehen. Eine erste Nutzerschnittstelle 108 ist insbesondere eingerichtet zum Auslesen eines Parktickets, enthaltend beispielsweise einen (aufgedruckten) Parkcode. Der Parkcode (z.B. ein Barcode oder QR-Code) enthält als Dateninhalt vorzugsweise zumindest die Parkvorgangskennung (insbesondere eine Parkticketkennung). Die Parkvorgangskennung ist insbesondere eindeutig einem Parkvorgang zugeordnet und insbesondere bei einem Einfahren eines Fahrzeugs generiert worden.

Eine weitere Nutzerschnittstelle 118 ist vorliegend ein Eingabemittel, insbesondere in Form eines Touchdisplays. Die weitere Nutzerschnittstelle 118 ist insbesondere eingerichtet zum Empfangen einer Parkvorgangskennung durch Detektieren einer manuell durch einen Nutzer eingegebenen Parkvorgangskennung, insbesondere in Form eines Fahrzeugkennzeichens des Fahrzeugs des Nutzers.

Darüber hinaus umfasst der Parkautomat 100 mindestens ein Ablaufsteuerungsmodul 106. Das Ablaufsteuerungsmodul 106 ist eingerichtet zum Steuern eines Bezahlvorgangs, basierend auf der empfangenen Parkbezahlanfrage. Dies meint insbesondere, dass das Ablaufsteuerungsmodul 106 das Ausführen der Parkbezahlanfrage bzw. des Bezahlvorgangs durch die Mehrzahl an involvierten Module des Parkautomaten 100 steuert bzw. koordiniert.

Der an dem Parkautomaten 100 durchgeführte Bezahlvorgang umfasst zumindest ein Übertragen des Parkdatensatzes bzw. der Parkvorgangskennung an eine entfernt von dem Parkautomaten 100 über eine erste Kommunikationsverbindung 116 verbundene (nicht gezeigte) Datenverarbeitungsvorrichtung (des Parksystems). Zum Übertragen des Parkdatensatzes kann der Parkautomat 100 insbesondere ein Kommunikationsmodul 114 umfassen. Das Kommunikationsmodul 114 ist für die erste Kommunikationsverbindung konfiguriert. Insbesondere kann die erste Kommunikationsverbindung 116 eine Internetverbindung sein, insbesondere eine TCP/IP-basierte Kommunikationsverbindung (und das Kommunikationsmodul 114 entsprechend konfiguriert sein).

Erfindungsgemäß umfasst der Parkautomat 100 mindestens ein Detektionsmodul 110. Das Detektionsmodul 110 ist eingerichtet zum Detektieren eines Ausführbarkeitsfehlers des Parkautomaten 100 bei einem Ausführen der Parkbezahlanfrage. Vorzugsweise kann das Detektionsmodul 110 eingerichtet sein zum Überwachen des Funktionszustands der ersten Kommunikationsverbindung (umfassend das Kommunikationsmodul 114) und/oder der mindestens einen Nutzerschnittstelle 108 118 und/oder des Ablaufsteuerungsmodul 106.

Das Überwachen des Funktionszustand der ersten Kommunikationsverbindung umfasst insbesondere ein Detektieren einer Kommunikationsunterbrechung zwischen dem Parkautomaten 100 und der Datenverarbeitungsvorrichtung. Eine Kommunikationsunterbrechung liegt insbesondere dann vor, wenn keine Daten zwischen Parkautomat 100 und Datenverarbeitungsvorrichtung (fehlerfrei) ausgetauscht werden können.

Um eine Kommunikationsunterbrechung zu detektieren, kann insbesondere der Datenverkehr über die erste Kommunikationsverbindung 116 überwacht werden, beispielsweise an dem Kommunikationsmodul 114 des Parkautomaten 100. Vorzugsweise kann überwacht werden, durch das Detektionsmodul 110, ob für eine vordefinierte Zeitdauer kein Empfang (durch das Kommunikationsmodul 114 des Parkautomaten 100) von Datenprotokolldaten und/oder Betriebsdaten detektiert wird. Wenn durch das Detektionsmodul 110 festgestellt wird, dass für eine vordefinierte Zeitdauer kein Empfang (durch das Kommunikationsmodul 114 des Parkautomaten 100) von Datenprotokolldaten und/oder Betriebsdaten detektiert wird, kann durch das Detektionsmodul 110 ein Ausführbarkeitsfehler des Parkautomaten bestimmt bzw. festgestellt werden. Wie noch beschrieben wird, kann das Detektionsmodul 110 weitere in den Bezahlvorgang involvierte Bezahlmodule überwachen, wie die mindestens eine Nutzerschnittstelle 108, 118 und/oder das Ablaufsteuerungsmodul 106.

Der Parkautomat 100 umfasst mindestens ein Generierungsmodul 112. Das Generierungsmodul 112 ist eingerichtet zumindest zum Bewirken eines Ausgebens eines durch ein (nicht gezeigtes) mobiles Endgerät auslesbaren Kommunikationsdatensatzes, sobald ein Ausführbarkeitsfehler des Parkautomaten 100 bei dem Ausführen der Parkbezahlanfrage detektiert wird. Insbesondere wird ein Ausgeben eines durch das mobile Endgerät auslesbaren Kommunikationsdatensatzes nur dann bewirkt, wenn ein Ausführbarkeitsfehler des Parkautomaten 100 bei dem Ausführen der Parkbezahlanfrage detektiert wird.

Der auslesbare Kommunikationsdatensatz enthält mindestens ein Instruktionsdatum für das mobile Endgerät zum Ausführen des Bezahlvorgangs mit der Datenverarbeitungsvorrichtung und/oder mit einer mit der Datenverarbeitungsvorrichtung verbindbaren Rechenvorrichtung unabhängig von dem Parkautomaten 100. Vorzugsweise kann das Generierungsmodul 112 eingerichtet sein zum Generieren eines grafischen Codes, enthaltend das mindestens eine Instruktionsdatum. In diesem Fall kann das Generierungsmodul 112 eingerichtet sein zum Bewirken eines Ausgebens des Kommunikationsdatensatzes durch ein Bewirken eines Anzeigens des grafischen Codes auf einer optionalen optischen Anzeige 118 des Parkautomaten 100. Alternativ oder zusätzlich kann das Generierungsmodul 112 eingerichtet sein zum Generieren eines über eine optionale Nahfeldschnittstelle 120 des Parkautomaten 100 übertragbaren Übertragungscodes, enthaltend das mindestens eine Instruktionsdatum. In diesem Fall kann das Generierungsmodul 112 eingerichtet sein zum Bewirken eines Ausgebens des Kommunikationsdatensatzes durch ein Bewirken eines Aussendens bzw. Bereitstellen des Übertragungscodes über die Nahfeldschnittstelle 120 (z.B. eine NFC-Schnittstelle oder eine Bluetooth-Schnittstelle).

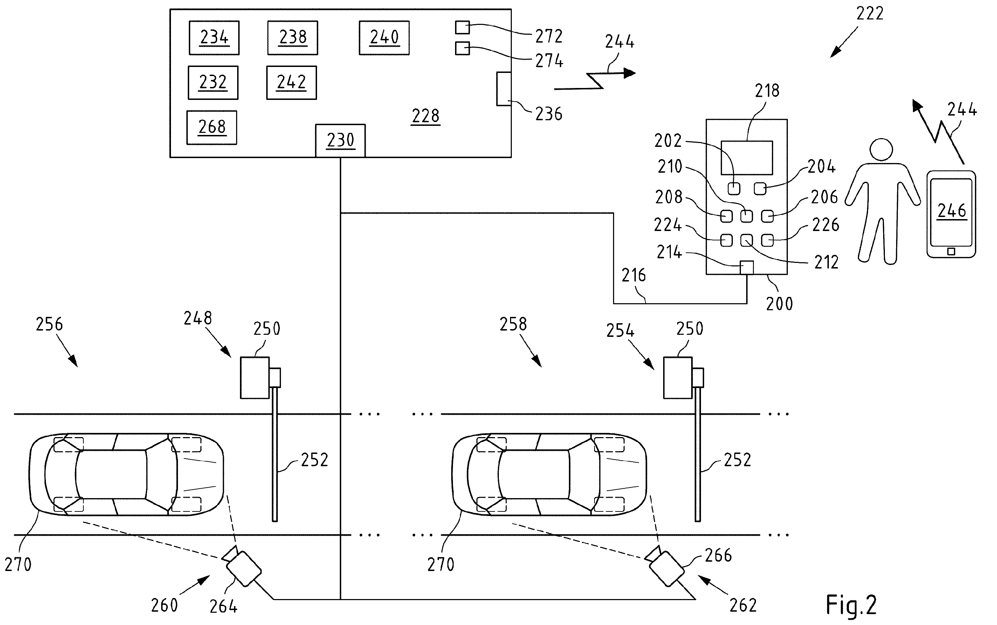

Die Figur 2 zeigt eine schematische Ansicht eines Ausführungsbeispiels eines Parksystems 222 gemäß der Erfindung mit einem Ausführungsbeispiel eines Parkautomaten 200 gemäß der Erfindung. Zur Vermeidung von Wiederholungen werden nachfolgend im Wesentlichen nur die Unterschiede zu dem Ausführungsbeispiel nach Figur 1 beschrieben, und ansonsten wird insbesondere auf die vorherigen Ausführungen verwiesen.

Das Parksystem 222 umfasst mindestens einen Parkautomaten 200 und mindestens eine (zentrale) Datenverarbeitungsvorrichtung 228. Der dargestellte Parkautomat 200 umfasst zumindest einen Prozessor 202, ein Speichermittel 204, eine Nutzerschnittstelle 208, 218, ein Ablaufsteuerungsmodul 206, ein Detektionsmodul 210, ein Generierungsmodul 212 und ein Kommunikationsmodul 214. Über eine erste Kommunikationsverbindung 216 ist der Parkautomat 200 datentechnisch verbunden mit der Datenverarbeitungsvorrichtung 228.

**In** dem vorliegenden Ausführungsbeispiel umfasst der Parkautomat 200 ferner als Bezahlmodule, die in den Bezahlvorgang involviert sein können, ein Kartenlesegerät 224 und ein Bargeldzahlmodul 226. Insbesondere kann ein Nutzer die Parkgebühr für seinen Parkvorgang mittels des Kartenlesegeräts 224 (und mit seiner Bezahlkarte, wie eine Kreditkarte oder dergleichen) oder mit Bargeld bezahlen.

Vorzugsweise kann das Detektionsmodul 210 (auch) eingerichtet sein zum Überwachen des (Funktions-)Zustands des Bargeldzahlmoduls 226 und insbesondere des (Funktions-)Zustands des Kartenlesegeräts 224. Wenn das Detektionsmodul 210 feststellt, dass das Bargeldzahlmodul 226 nicht funktionsfähig ist (z.B. die Münz- und/oder Geldscheinkasse voll ist oder in der Münz- und/oder Geldscheinkasse kein Wechselgeld vorhanden ist), kann das Detektionsmodul 210 einen Ausführbarkeitsfehler des Parkautomaten 200 detektieren. Dann kann das Generierungsmodul 212 ein Ausgeben des auslesbaren Kommunikationsdatensatzes bewirken.

Wenn das Detektionsmodul 210 feststellt, dass das Kartenlesegerät 224 nicht funktionsfähig ist (z.B. Karten nicht gelesen werden können), kann das Detektionsmodul 210 einen Ausführbarkeitsfehler des Parkautomaten 200 detektieren. Dann kann das Generierungsmodul 212 ein Ausgeben des auslesbaren Kommunikationsdatensatzes bewirken.

Vorzugsweise kann das Detektionsmodul 210 (weiter) eingerichtet sein zum Überwachen des (Funktions-)Zustands der Nutzerschnittstellen 208, 218 des Parkautomaten 200. Wenn das Detektionsmodul 210 feststellt, dass wenigstens eine Nutzerschnittstelle 208, 218 nicht funktionsfähig ist, kann das Detektionsmodul 210 einen Ausführbarkeitsfehler des Parkautomaten 200 detektieren. Dann kann das Generierungsmodul 212 ein Ausgeben des auslesbaren Kommunikationsdatensatzes bewirken. Das Detektionsmodul 210 kann insbesondere den (Funktions-)Zustand eines Parkticket-Lesers und/oder eines Touch-Displays und/oder einer Tastatur des Automaten 200 überwachen.

Wie beschrieben wurde, kann bei bevorzugten Varianten der Erfindung das Generierungsmodul 212 nur dann ein Ausgeben des auslesbaren Kommunikationsdatensatzes bewirken, wenn an dem Parkautomaten 200 überhaupt kein Durchführen des Bezahlvorgangs möglich ist, in diesem Ausführungsbeispiel also beispielsweise, wenn sowohl das Kartenlesegerät 224 als auch das Bargeldzahlmodul 226 nicht funktionsfähig sind.

Die dargestellte Datenverarbeitungsvorrichtung 228 umfasst ein erstes Kommunikationsmodul 230 und ein zweites Kommunikationsmodul 236. Wie zu erkennen ist, ist das erste Kommunikationsmodul 230 eingerichtet zum Kommunizieren über die erste Kommunikationsverbindung 216.

Das Parksystem 222 umfasst insbesondere eine Parkvorrichtung, die lediglich zugunsten einer besseren Übersicht nicht in der Figur 2 dargestellt ist. Die Parkvorrichtung, wie ein Parkplatz, ein Parkhaus etc., dient dazu, dass Nutzer ihre Fahrzeuge auf Stellplätzen der Parkvorrichtung (temporär) abstellen können. Ein entsprechender Vorgang wird insbesondere als Parkvorgang bezeichnet.

Vorzugsweise kann mindestens eine Einfahrt 256 und mindestens eine Ausfahrt 258 vorgesehen sein. Ein Fahrzeug 270 kann über die mindestens eine Einfahrt 256 (des Parksystems 222) in die Parkvorrichtung einfahren. Ferner kann ein Fahrzeug 270 über die mindestens eine Ausfahrt 258 (des Parksystems 222) aus der Parkvorrichtung ausfahren.

Vorzugsweise kann das Parksystem 222 eine an der Einfahrt 256 angeordnete (beschrankte) Zufahrtsvorrichtung 248 mit einem Sperrmittel 250, 252 umfassen. Vorliegend ist beispielhaft als Sperrmittel 250, 252 ein an einer Basis 250 zwischen einer geöffneten Position und einer geschlossenen Position bewegbarer Schrankenbaum 252 vorgesehen. Es versteht sich, dass bei Varianten der Erfindung andere Sperrmittel vorgesehen sein können oder eine Zufahrtsvorrichtung ohne (physisches) Sperrmittel.

Fener kann das Parksystem 222 eine an der Ausfahrt 258 angeordnete (beschrankte) Zufahrtsvorrichtung 254 mit einem Sperrmittel 250, 252 umfassen. Es versteht sich, dass bei Varianten der Erfindung auch eine Zufahrtsvorrichtung ohne einem Sperrmittel vorgesehen sein kann.

Das Parksystem 222 umfasst beispielsweise mindestens eine erste Kennzeichenbestimmungseinrichtung 260, eingerichtet zum Bestimmen eines Fahrzeugkennzeichens eines in eine Parkvorrichtung einfahrenden Fahrzeugs 270. Die erste Kennzeichenbestimmungseinrichtung 260 umfasst mindestens eine Kamera 264. Die Kamera 264 kann an der Einfahrt 256 angeordnet sein. Insbesondere kann die Kamera 264 derart an der Einfahrt 256 angeordnet sein, dass das Fahrzeugkennzeichen eines durch den Einfahrtsbereich (z.B. vor dem Sperrelement 250, 252) fahrenden Fahrzeugs 270 den Erfassungsbereich der Kamera 264 passiert, insbesondere stets passieren muss.

Die erste Kennzeichenbestimmungseinrichtung 260 kann ferner mindestens ein Bildauswertemodul 232 umfassen. Beispielsweise kann das Bildauswertemodul 232 als durch den Prozessor 272 und das Speichermittel 274 ausführbares Softwaremodul in der Datenverarbeitungsvorrichtung 228 implementiert sein. Über ein (drahtloses und/oder drahtgebundenes) Datenkommunikationsnetz können erfasste Bilddaten von der Kamera 264 an beispielsweise das erste Kommunikationsmodul 230 (oder ein weitere Kommunikationsmodul) der Datenverarbeitungsvorrichtung 228 übertragen und insbesondere dem Bildauswertemodul 232 bereitgestellt werden.

Die erste Kennzeichenbestimmungseinrichtung 260 kann insbesondere eine LPR-Kennzeichenbestimmungseinrichtung sein. Bei einer LPR-Kennzeichenbestimmungseinrichtung wird das mittels der Kamera 264 erfasste Bild des Fahrzeugkennzeichens durch das Bildauswertemodul 232 insbesondere mittels OCR (Optical Character Recognition) ausgewertet, um das Fahrzeugkennzeichen zu ermitteln.

Es versteht sich, dass insbesondere bei einer Einfahrt mit einer Mehrzahl von Fahrspuren eine entsprechende Mehrzahl an Kameras vorgesehen sein kann.

Das Parksystem 222 umfasst beispielsweise mindestens eine zweite Kennzeichenbestimmungseinrichtung 262, eingerichtet zum Bestimmen eines Fahrzeugkennzeichens eines aus der Parkvorrichtung ausfahrenden Fahrzeugs 270. Die zweite Kennzeichenbestimmungseinrichtung 262 umfasst mindestens eine Kamera 266. Die Kamera 266 kann an der Ausfahrt 258 angeordnet sein. Insbesondere kann die Kamera 266 derart an der Ausfahrt 258 angeordnet sein, dass das Fahrzeugkennzeichen eines in einem Ausfahrtsbereich ausfahrendes Fahrzeugs 270 den Erfassungsbereich der Kamera 266 passiert, insbesondere stets passieren muss.

Die zweite Kennzeichenbestimmungseinrichtung 262 kann ferner mindestens ein Bildauswertemodul 232 umfassen. Insbesondere können sich die erste und zweite Kennzeichenbestimmungseinrichtung 260, 262 ein gemeinsames Bildauswertemodul 232 teilen.

Über das Datenkommunikationsnetz können erfasste Bilddaten von der Kamera 266 an das Kommunikationsmodul 230 der Datenverarbeitungsvorrichtung 228 übertragen und insbesondere dem Bildauswertemodul 232 bereitgestellt werden. Die zweite Kennzeichenbestimmungseinrichtung 262 kann insbesondere eine LPR-Kennzeichenbestimmungseinrichtung sein, wie die erste Kennzeichenbestimmungseinrichtung.

Bei Varianten der Erfindung kann das Parksystem alternativ oder zusätzlich an einer Einfahrt ein Parkticketausgabemodul und an der Ausfahrt eine Validatorvorrichtung umfassen. Das Parkticketausgabemodul kann eingerichtet sein zum Ausgeben eines Parktickets, enthaltend als Parkvorgangskennung eine Parkticketkennung. Die Validatorvorrichtung kann eingerichtet sein zum Einlesen einer Parkticketkennung eines Parktickets und zum Freigeben der Zufahrtsvorrichtung, wenn die Parkticketkennung als ausfahrtsberechtigt gekennzeichnet ist. Hierzu kann die Validatorvorrichtung sich insbesondere mit der Datenverarbeitungsvorrichtung austauschen.

Insbesondere das Speichermodul 234 der Datenverarbeitungsvorrichtung 228 kann eingerichtet sein zum Empfangen von Einfahrtdatensätzen. Ein Einfahrtdatensatz kann zumindest die Parkvorgangskennung (z.B. in Form des (bestimmten) Fahrzeugkennzeichens und/oder in Form der Parkticketkennung des ausgegebenen Parktickets) und einen Einfahrtzeitpunkt (z.B. den Erfassungszeitpunkt des Fahrzeugkennzeichens bzw. den Ausgabezeitpunkt des Parktickets) enthalten. Beispielsweise kann das Parkticketausgabemodul und/oder eine Kennzeichenbestimmungseinrichtung einen jeweiligen Einfahrtdatensatz dem Speichermodul 234 bereitstellen.

Das mindestens ein Speichermodul 234 kann eingerichtet sein zum Speichern des jeweils empfangenen Einfahrtdatensatzes in einer Datenbank 268 des Parksystems 222. Die Datenbank 268 kann beispielsweise in der Datenverarbeitungsvorrichtung 228 implementiert sein.

Die Datenverarbeitungsvorrichtung 228 umfasst vorzugsweise mindestens ein Parkdauerbestimmungsmodul 238. Das Parkdauerbestimmungsmodul 238 kann eingerichtet sein zum Bestimmen der Parkdauer eines Parkvorgangs, basierend auf dem Parkbeendigungszeitpunkt eines über das zweite Kommunikationsmodul 236 empfangenen Endgerätedatensatzes und einem Einfahrtzeitpunkt eines gespeicherten Einfahrtdatensatzes. Der Einfahrtdatensatz aus der Mehrzahl von gespeicherten Einfahrtdatensätze kann anhand der jeweiligen Parkvorgangskennung dem Endgerätedatensatz zuordenbar sein.

Insbesondere kann ein mobiles Endgerät 246 eines Nutzers einen Endgerätedatensatz über eine herstellbare zweite Kommunikationsverbindung 244 aussenden, basierend auf einem durch den Parkautomaten 200 ausgegebenen Kommunikationsdatensatz und der Parkvorgangskennung des Parkvorgangs des Nutzers. Wie beschrieben wurde, kann bei Detektion eines Ausführungsfehlers des Parkautomaten 200 ein Anzeigen eines graphischen Codes auf der Nutzerschnittstelle 218 bewirkt werden, der als Dateninhalt mindestens ein Instruktionsdatum enthält. Das mobile Endgerät 246 kann, beispielsweise durch eine (nicht gezeigte) Kamera, den graphischen Code erfassen und den Dateninhalt in Form des mindestens einen Instruktionsdatums extrahieren.

Das mindestens eine Instruktionsdatum (z.B. ausführbaren Code, welcher das Starten eines Browsers initiiert, und eine Webadresse) dient insbesondere dem Herstellen einer Datenverbindung über die zweite Kommunikationsverbindung 244 mit der Datenverarbeitungsvorrichtung 228. Nach der hergestellten Datenverbindung (insbesondere dem Aufrufen der Webseite der Webadresse) kann der Endgerätedatensatz, enthaltend zumindest die Parkvorgangskennung, übertragen werden. Das Übertragen kann insbesondere durch den Nutzer durch Eingeben oder Einscannen der Parkvorgangskennung mittels seines mobilen Endgeräts 246 erfolgen. Der Parkbeendigungszeitpunkt des Parkvorgangs, der für die Bestimmung der Parkdauer herangezogen wird, kann beispielsweise der Empfangszeitpunkt des Endgerätedatensatzes sein.

Anhand der Parkvorgangskennung des Endgerätedatensatzes kann der zugehörige Einfahrtdatensatz mit der identischen Parkvorgangskennung aus der Mehrzahl von gespeicherten Einfahrtdatensätzen bestimmt werden. Dann kann anhand des Parkbeendigungszeitpunkts und des Einfahrtzeitpunkts die Parkdauer bestimmt werden.

**In** analoger Weise kann das Parkdauerbestimmungsmodul 238 die Parkdauer eines Parkvorgangs bestimmen, basierend auf einen empfangenen Parkdatensatz und dem zugehörigen Einfahrtdatensatz.

Darüber hinaus kann die Datenverarbeitungsvorrichtung 228 mindestens ein Parkgebührbestimmungsmodul 240 umfassen, eingerichtet zum Bestimmen der Parkgebühr eines Parkvorgangs, basierend auf der bestimmten Parkdauer des Parkvorgangs und mindestens einem Tarifdatum (in bekannter Weise). Das zweite Kommunikationsmodul 236 kann eingerichtet sein zum Übertragen der bestimmten Parkgebühr an das mobile Endgerät 246, insbesondere über die zweite Kommunikationsverbindung 244.

Anschließend kann ein Bezahlungsmodul 242 der Datenverarbeitungsvorrichtung eine Bezahlung der bestimmten Parkgebühr durch das mobile Endgerät 246 ermöglichen.

Wenn eine (erfolgreiche) Entrichtung der Parkgebühr detektiert wird, kann die zugehörige Parkvorgangskennung, beispielsweise durch den Prozessor 272, als ausfahrtberechtigt gekennzeichnet werden. Wird diese Parkvorgangskennung dann durch die zweite Kennzeichenbestimmungseinrichtung bzw. die Validatorvorrichtung erfasst, kann ein Ausfahren freigegeben werden, der Schrankenbaum 252 insbesondere geöffnet werden.

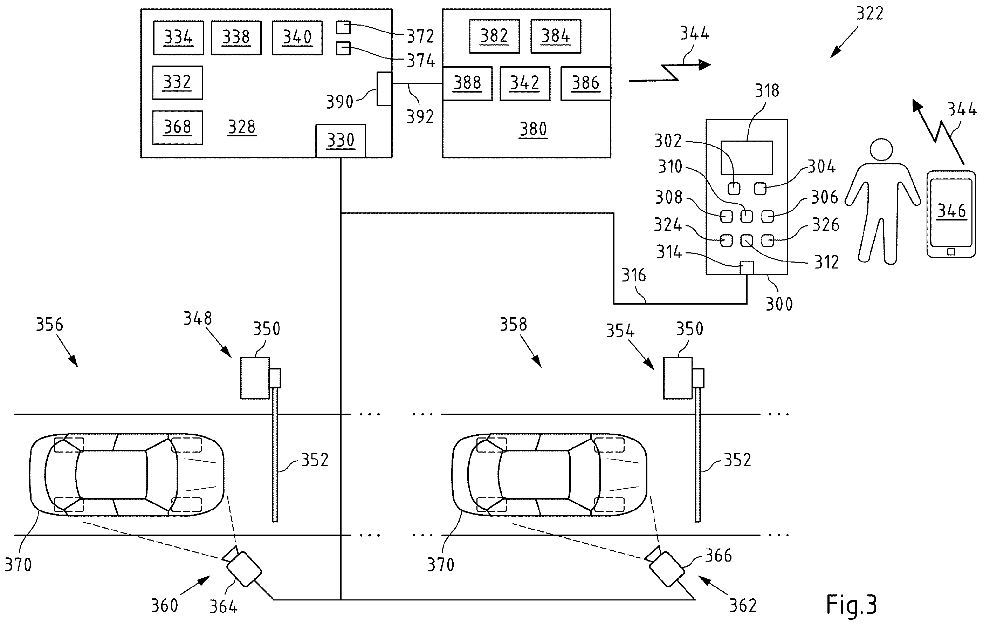

Die Figur 3 zeigt eine schematische Ansicht eines weiteren Ausführungsbeispiels eines Parksystems 322 gemäß der Erfindung mit einem Ausführungsbeispiel eines Parkautomaten 300 gemäß der Erfindung. Zur Vermeidung von Wiederholungen werden nachfolgend im Wesentlichen nur die Unterschiede zu den Ausführungsbeispielen nach Figur 1 und 2 beschrieben und ansonsten insbesondere auf die vorherigen Ausführungen verwiesen.

Im Vergleich mit Figur 2 umfasst das Parksystem 322 nach Figur 3 insbesondere eine Rechenvorrichtung 380, die über eine dritte Kommunikationsverbindung 392 mit der Datenverarbeitungsvorrichtung 328 verbunden ist. Die Rechenvorrichtung 380 umfasst zumindest einen Prozessor 382 und ein Speichermittel 384 zum Ausführen und/oder Steuern von Modulen 342, 386, 388 der Rechenvorrichtung 380.

Wie zu erkennen ist, umfasst vorliegend nicht die Datenverarbeitungsvorrichtung 328 das Bezahlungsmodul 342, sondern die Rechenvorrichtung 380. Die Rechenvorrichtung 380 kann ein drittes Kommunikationsmodul 386 umfassen, eingerichtet zum Empfangen eines (zuvor beschriebenen) Endgerätedatensatzes. Dieser kann durch ein weitere Kommunikationsmodul 388 der Rechenvorrichtung 380 und ein weiteres Kommunikationsmodul 390 der Datenverarbeitungsvorrichtung 328 übertragen werden. Die bestimmte Parkgebühr kann über die Rechenvorrichtung 380 an das mobile Endgerät 346 übertragen werden. Dann kann das Bezahlungsmodul 342 der Rechenvorrichtung eine Bezahlung der bestimmten Parkgebühr durch das mobile Endgerät 346 ermöglichen. Eine (erfolgreiche) Bezahlung kann der Datenverarbeitungsvorrichtung 328 gemeldet werden. Dann kann die zugehörige Parkvorgangskennung, beispielsweise durch den Prozessor 372, als ausfahrtberechtigt gekennzeichnet werden, wie beschrieben wurde.

Bei Varianten der Erfindung kann die Rechenvorrichtung alternativ oder zusätzlich ein Parkdauerbestimmungsmodul und/oder ein Parkgebührbestimmungsmodul umfassen.

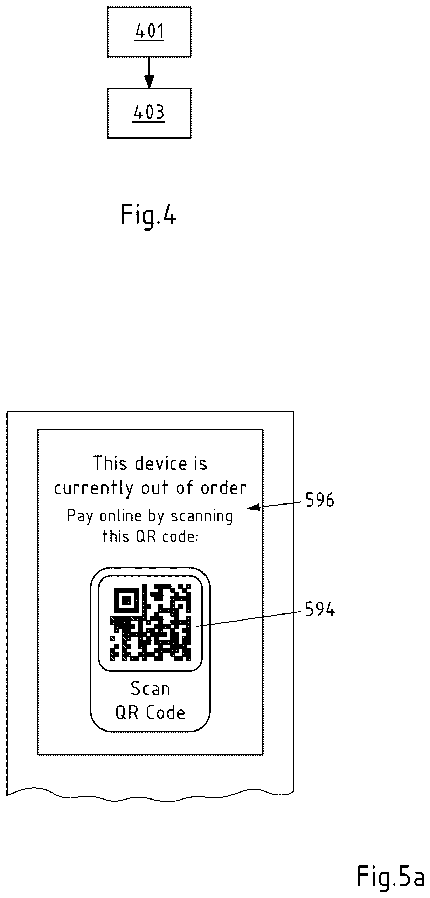

Die Figur 4 zeigt eine schematische Ansicht eines Ausführungsbeispiels eines Verfahrens gemäß der vorliegenden Erfindung. Das Verfahren ist insbesondere ein computerimplementiertes Verfahren zum Betreiben eines Parkautomaten, insbesondere eines Parkautomaten nach Figur 1, 2 und/oder 3.

**In** einem Schritt 401 erfolgt ein Detektieren, durch mindestens ein Detektionsmodul des Parkautomaten, eines Ausführbarkeitsfehlers des Parkautomaten bei der Ausführung von Parkbezahlanfragen, wie insbesondere bereits beschrieben wurde.

**In** einem Schritt 403 erfolgt ein Bewirken, durch mindestens ein Generierungsmodul des Parkautomaten, eines Ausgebens eines durch ein mobiles Endgerät auslesbaren Kommunikationsdatensatzes, sobald ein Ausführbarkeitsfehlers des Parkautomaten bei einer Ausführung der Parkbezahlanfrage detektiert wird, wie insbesondere bereits beschrieben wurde.

Der auslesbare Kommunikationsdatensatz enthält mindestens ein Instruktionsdatum für das mobile Endgerät zum Ausführen eines Bezahlvorgangs mit einer Datenverarbeitungsvorrichtung und/oder einer mit der Datenverarbeitungsvorrichtung verbindbaren Rechenvorrichtung unabhängig von dem Parkautomaten.

Die Figuren 5a bis 5d zeigen verschiedene Displayanzeigen (eines mobilen Endgeräts bzw. des Parkautomaten) zu verschiedenen Stadien eines Ausführungsbeispiels eines erfindungsgemäßen Verfahrens. Zur Vermeidung von Wiederholungen wird auch hier zunächst auf die vorherigen Ausführungsbeispiele verwiesen. Insbesondere wird nachfolgend ein beispielhafter Ablauf eines erfindungsgemäßen Verfahrens in einem erfindungsgemäßen Parksystem anhand der Figuren 5a bis 5d näher erläutert.

Sobald das Detektionsmodul eines Parkautomaten erkennt, dass der Parkautomat einen Ausführbarkeitsfehler aufweist, beispielsweise in einem "Außer Betrieb"-Zustand ist, veranlasst das Generierungsmodul ein Ausgeben eines Kommunikationsdatensatzes. Wie in Figur 5a dargestellt ist, kann beispielsweise ein Anzeigen eines QR-Codes 594 bewirkt werden. Optional kann ein Anzeigen einer Aufforderung 596 bzw. eines Nutzerhinweises auf der Anzeige des Parkautomaten bewirkt werden. Der Nutzerhinweis kann u.a. Instruktionen für den Nutzer enthalten, wie er das Bezahlen seines Parkvorgangs mittels eines (netzwerkfähigen) mobilen Endgeräts fortsetzen kann.

Insbesondere wird der Nutzer angeleitet, den auf der Anzeige angezeigten QR-Code 594 mit einem netzwerkfähigen mobilen Endgerät (z.B. Smartphone) zu scannen. Der QR-Code 594 enthält insbesondere als Instruktionsdatum eine Webadresse (URL), die zu einer alternativen Zahlungsmethode unabhängig von dem (defekten) Parkautomaten führt.

Der Nutzer kann den QR-Code 594 mit seinem mobilen Endgerät einscannen und wird aufgrund des mindestens einen Instruktionsdatums in einem Browser des mobilen Endgeräts (automatisch) auf eine Zahlungsplattform weitergeleitet, die beispielsweise von der Datenverarbeitungsvorrichtung oder der Rechenvorrichtung bereitgestellt werden kann.

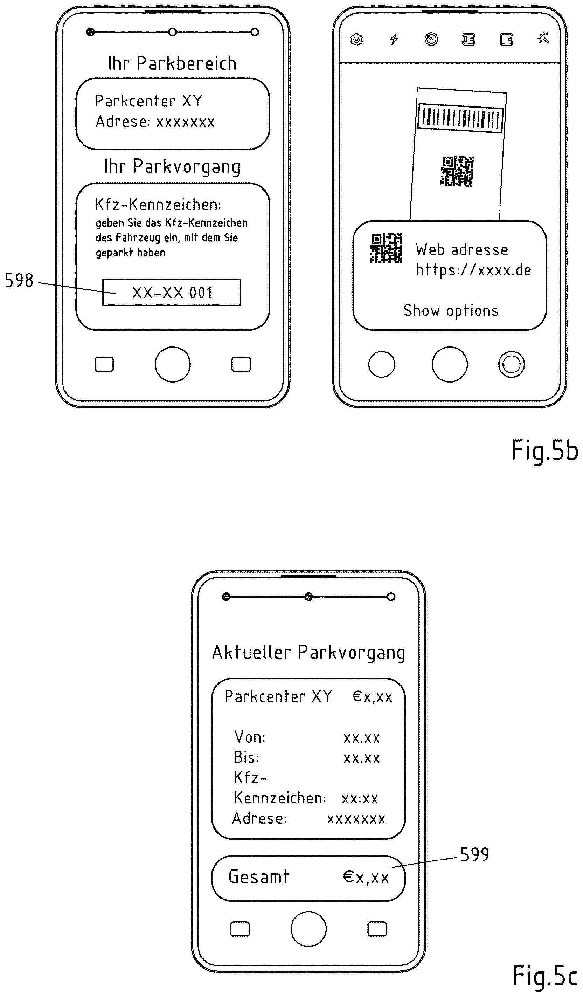

In der Zahlungsplattform kann der Nutzer die Parkvorgangskennung (siehe Bezugszeichen 598) für den zu zahlenden Parkvorgang eingeben (z.B. das Fahrzeugkennzeichen des geparkten Fahrzeugs oder einen optischen Code eines Parktickets), wie in Figur 5b beispielhaft dargestellt ist. Das Eingeben eines optischen Codes kann dabei durch Scannen des optischen Codes des Parktickets erfolgen, wie ebenfalls in Figur 5b dargestellt ist.

Dann können in vorbeschriebener Weise Parkdauer und Parkgebühr (siehe Bezugszeichen 599) bestimmt werden. Die zu entrichtende Parkgebühr kann an das mobile Endgerät übertragen und durch das mobile Endgerät angezeigt werden, wie beispielhaft in Figur 5c dargestellt ist.

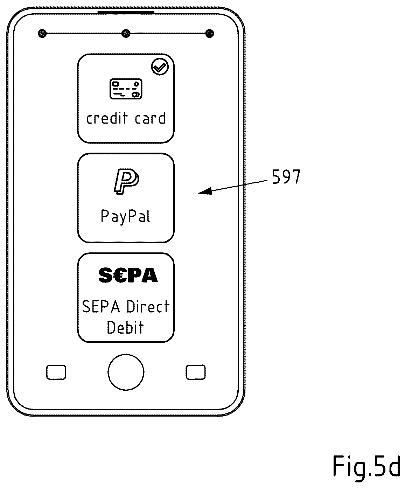

Der Nutzer kann seine Parkgebühren bargeldlos über Eingabe eines Zahlungsmittels (siehe Bezugszeichen 597) z.B. Kreditkarte, PayPal oder per SEPA-Einzug, bezahlen, wie in Figur 5d beispielhaft dargestellt.

### Bezugszeichenliste:

- 100: Parkautomat
- 102: Prozessor
- 104: Speichermittel
- 106: Ablaufsteuerungsmodul
- 108: Nutzerschnittstelle
- 110: Detektionsmodul
- 112: Generierungsmodul
- 114: Kommunikationsmodul
- 116: erste Kommunikationsverbindung
- 118: Nutzerschnittstelle
- 120: Nahfeldschnittstelle
- 200: Parkautomat
- 202: Prozessor
- 204: Speichermittel
- 206: Ablaufsteuerungsmodul
- 208: Nutzerschnittstelle
- 210: Detektionsmodul
- 212: Generierungsmodul
- 214: Kommunikationsmodul
- 216: erste Kommunikationsverbindung
- 218: Nutzerschnittstelle
- 222: Parksystem
- 224: Kartenlesegerät
- 226: Bargeldzahlmodul
- 228: Datenverarbeitungsvorrichtung
- 230: Kommunikationsmodul
- 232: Bildauswertemodul
- 234: Speichermodul
- 236: Kommunikationsmodul
- 238: Parkdauerbestimmungsmodul
- 240: Parkgebührbestimmungsmodul
- 242: Bezahlungsmodul
- 244: Kommunikationsverbindung
- 246: mobiles Endgerät
- 248: Zufahrtsvorrichtung
- 250: Sperrmittel
- 252: Sperrmittel
- 254: Zufahrtsvorrichtung
- 256: Einfahrt
- 258: Ausfahrt
- 260: Kennzeichenbestimmungseinrichtung
- 262: Kennzeichenbestimmungseinrichtung
- 264: Kamera
- 266: Kamera
- 268: Datenbank
- 270: Fahrzeug
- 272: Prozessor
- 274: Speichermittel
- 300: Parkautomat
- 302: Prozessor
- 304: Speichermittel
- 306: Ablaufsteuerungsmodul
- 308: Nutzerschnittstelle
- 310: Detektionsmodul
- 312: Generierungsmodul
- 314: Kommunikationsmodul
- 316: erste Kommunikationsverbindung
- 318: Nutzerschnittstelle
- 322: Parksystem
- 324: Kartenlesegerät
- 326: Bargeldzahlmodul
- 328: Datenverarbeitungsvorrichtung
- 330: Kommunikationsmodul
- 332: Bildauswertemodul
- 334: Speichermodul
- 336: Kommunikationsmodul
- 338: Parkdauerbestimmungsmodul
- 340: Parkgebührbestimmungsmodul
- 342: Bezahlungsmodul
- 344: Kommunikationsverbindung
- 346: mobiles Endgerät
- 348: Zufahrtsvorrichtung
- 350: Sperrmittel
- 352: Sperrmittel
- 354: Zufahrtsvorrichtung
- 356: Einfahrt
- 358: Ausfahrt
- 360: Kennzeichenbestimmungseinrichtung
- 362: Kennzeichenbestimmungseinrichtung
- 364: Kamera
- 366: Kamera
- 368: Datenbank
- 370: Fahrzeug
- 372: Prozessor
- 374: Speichermittel
- 380: Rechenvorrichtung
- 382: Prozessor
- 384: Speichermittel
- 386: Kommunikationsmodul
- 388: Kommunikationsmodul
- 390: Kommunikationsmodul
- 392: Kommunikationsverbindung
- 401: Schritt
- 403: Schritt
- 594: QR-Code
- 596: Aufforderung
- 597: Zahlungsmittel
- 598: Feld für Parkvorgangskennung
- 599: Parkgebühr

## Patentansprüche

1. Parkautomat (100, 200, 300) für ein Parksystem (222, 322), umfassend:
- mindestens eine Nutzerschnittstelle (108, 118, 208, 218, 308, 318), eingerichtet zum Empfangen einer Parkbezahlanfrage, enthaltend einen Parkdatensatz mit mindestens einer Parkvorgangskennung,
- mindestens ein Ablaufsteuerungsmodul (106, 206, 306), eingerichtet zum Steuern eines Bezahlvorgangs, basierend auf der empfangenen Parkbezahlanfrage,
- wobei der Bezahlvorgang zumindest ein Übertragen des Parkdatensatzes an eine entfernt von dem Parkautomaten (100, 200, 300) über eine erste Kommunikationsverbindung (116, 216, 316) verbundene Datenverarbeitungsvorrichtung (228, 328) umfasst,
**dadurch gekennzeichnet, dass** der Parkautomat (100, 200, 300) umfasst:
- mindestens ein Detektionsmodul (110, 210, 310), eingerichtet zum Detektieren eines Ausführbarkeitsfehlers des Parkautomaten (100, 200, 300) bei einem Ausführen der Parkbezahlanfrage, und
- mindestens ein Generierungsmodul (112, 212, 312), eingerichtet zumindest zum Bewirken eines Ausgebens eines durch ein mobiles Endgerät (246, 346) auslesbaren Kommunikationsdatensatzes, wenn ein Ausführbarkeitsfehler des Parkautomaten (100, 200, 300) bei dem Ausführen der Parkbezahlanfrage detektiert wird,
- wobei der auslesbare Kommunikationsdatensatz mindestens ein Instruktionsdatum für das mobile Endgerät (246, 346) zum Ausführen des Bezahlvorgangs mit der Datenverarbeitungsvorrichtung (228, 328) und/oder mit einer mit der Datenverarbeitungsvorrichtung (228, 328) verbindbaren Rechenvorrichtung (380) unabhängig von dem Parkautomaten (100, 200, 300) enthält.

2. Parkautomat (100, 200, 300) nach Anspruch 1, **dadurch gekennzeichnet, dass**
- das Generierungsmodul (112, 212, 312) eingerichtet ist zum Generieren eines grafischen Codes, enthaltend das mindestens eine Instruktionsdatum, und
- das Generierungsmodul (112, 212, 312) eingerichtet ist zum Bewirken eines Ausgebens des grafischen Codes durch ein Bewirken eines Anzeigens des grafischen Codes auf einer optischen Anzeige (118, 218, 318) des Parkautomaten (100, 200, 300).

3. Parkautomat (100, 200, 300) nach Anspruch 1 oder 2, **dadurch gekennzeichnet, dass**
- das Generierungsmodul (112, 212, 312) eingerichtet ist zum Generieren eines über eine Nahfeldschnittstelle (120) des Parkautomaten (100, 200, 300) übertragbaren Übertragungscodes, enthaltend das mindestens eine Instruktionsdatum, und
- das Generierungsmodul (112, 212, 312) eingerichtet ist zum Bewirken eines Ausgebens des Kommunikationsdatensatzes durch ein Bewirken eines Aussendens des Übertragungscodes über die Nahfeldschnittstelle (120).

4. Parkautomat (100, 200, 300) nach Anspruch 2 oder 3, **dadurch gekennzeichnet, dass**
- das Generierungsmodul (112, 212, 312) eingerichtet ist zum Generieren eines dynamischen grafischen Codes und/oder eines dynamischen Übertragungscodes.

5. Parkautomat (100, 200, 300) nach einem der vorherigen Ansprüche, **dadurch gekennzeichnet, dass**
- das Detektionsmodul (110, 210, 310) eingerichtet ist zum Überwachen der ersten Kommunikationsverbindung (116, 216, 316), und
- das Detektionsmodul (110, 210, 310) eingerichtet ist zum Detektieren eines Ausführbarkeitsfehlers des Parkautomaten (100, 200, 300), wenn durch das Überwachen der ersten Kommunikationsverbindung (116, 216, 316) eine Kommunikationsunterbrechung mit der Datenverarbeitungsvorrichtung (228, 328) festgestellt wird.

6. Parkautomat (100, 200, 300) nach Anspruch 5, **dadurch gekennzeichnet, dass**
- das Detektionsmodul (110, 210, 310) eingerichtet ist zum Überwachen der ersten Kommunikationsverbindung (116, 216, 316) durch Überwachen der über die erste Kommunikationsverbindung (116, 216, 316) durch den Parkautomaten (100, 200, 300) von der Datenverarbeitungsvorrichtung (228, 328) empfangenen Datenprotokolldaten und/oder Betriebsdaten, und
- das Detektionsmodul (110, 210, 310) eingerichtet ist zum Feststellen einer Kommunikationsunterbrechung, wenn für eine vordefinierte Zeitdauer kein Empfang von Datenprotokolldaten und/oder Betriebsdaten detektiert wird.

7. Parkautomat (100, 200, 300) nach einem der vorherigen Ansprüche, **dadurch gekennzeichnet, dass**
- das Detektionsmodul (110, 210, 310) eingerichtet ist zum Überwachen mindestens eines in den Bezahlvorgang involvierten Bezahlmoduls (224, 226, 324, 326) des Parkautomaten (100, 200, 300), und
- das Detektionsmodul (110, 210, 310) eingerichtet ist zum Detektieren eines Ausführbarkeitsfehlers des Parkautomaten (100, 200, 300), wenn durch das Überwachen des mindestens einen Bezahlmoduls (224, 226, 324, 326) festgestellt wird, dass der Bezahlvorgang an dem Parkautomaten (100, 200, 300) nicht ausführbar ist.

8. Parkautomat (100, 200, 300) nach Anspruch 7, **dadurch gekennzeichnet, dass**
- das mindestens eine Bezahlmodul (224, 226, 324, 326) ein Bargeldzahlmodul ist,
- wobei das Detektionsmodul (110, 210, 310) eingerichtet ist zum Überwachen des Zustands des Bargeldzahlmoduls,
und/oder
- das mindestens eine Bezahlmodul (224, 226, 324, 326) ein Kartenlesegerät ist,
- wobei das Detektionsmodul (110, 210, 310) eingerichtet ist zum Überwachen des Zustands des Kartenlesegeräts.

9. Parkautomat (100, 200, 300) nach einem der vorherigen Ansprüche, **dadurch gekennzeichnet, dass**
- das Detektionsmodul (110, 210, 310) eingerichtet ist zum Überwachen mindestens einer Nutzerschnittstelle (100, 118, 208, 218, 308, 318) des Parkautomaten (100, 200, 300), und
- das Detektionsmodul (110, 210, 310) eingerichtet ist zum Detektieren eines Ausführbarkeitsfehlers des Parkautomaten (100, 200, 300), wenn durch das Überwachen der mindestens einen Nutzerschnittstelle (100, 118, 208, 218, 308, 318) festgestellt wird, dass ein Bezahlvorgang an dem Parkautomaten (100, 200, 300) nicht ausführbar ist.

10. Parkautomat (100, 200, 300) nach Anspruch 9, **dadurch gekennzeichnet, dass**
- die mindestens eine Nutzerschnittstelle (100, 118, 208, 218, 308, 318) ein Parkticket-Leser ist,
- wobei das Detektionsmodul (110, 210, 310) eingerichtet ist zum Überwachen des Zustands des Parkticket-Lesers,
und/oder
- die mindestens eine Nutzerschnittstelle (100, 118, 208, 218, 308, 318) ein Touch-Display ist,
- wobei das Detektionsmodul (110, 210, 310) eingerichtet ist zum Überwachen des Zustands des Touch-Displays.
und/oder
- die mindestens eine Nutzerschnittstelle (100, 118, 208, 218, 308, 318) eine Tastatur ist,
- wobei das Detektionsmodul (110, 210, 310) eingerichtet ist zum Überwachen des Zustands der Tastatur.

11. Parkautomat (100, 200, 300) nach einem der vorherigen Ansprüche, **dadurch gekennzeichnet, dass**
- der Kommunikationsdatensatz als Instruktionsdatum zumindest eine Netzwerkadresse der Datenverarbeitungsvorrichtung (228, 328) und/oder eine Netzwerkadresse der Rechenvorrichtung (380) umfasst, derart, dass durch das mobile Endgerät (246, 346) über eine zweite Kommunikationsverbindung (244, 344) eine Datenverbindung zwischen dem mobilen Endgerät (246, 346) und der Datenverarbeitungsvorrichtung (228, 328) und/oder der Rechenvorrichtung (380) herstellbar ist,
- wobei sich die zweite Kommunikationsverbindung (244, 344) von der ersten Kommunikationsverbindung (116, 216, 316) unterscheidet.

12. Parksystem (222, 322), umfassend:
- mindestens einen Parkautomaten (100, 200, 300) nach einem der vorherigen Ansprüche, und
- eine über eine erste Kommunikationsverbindung (116, 216, 316) mit dem Parkautomaten verbundene Datenverarbeitungsvorrichtung (228, 328) und/oder mindestens eine mit der Datenverarbeitungsvorrichtung (228, 328) verbindbare Rechenvorrichtung (380).

13. Parksystem (222, 322) nach Anspruch 12, **dadurch gekennzeichnet, dass**
- die Datenverarbeitungsvorrichtung (228, 328) eingerichtet ist zum Empfangen eines Einfahrtdatensatzes, enthaltend zumindest mindestens eine Parkvorgangskennung und einen Einfahrtzeitpunkt eines Fahrzeugs (270, 370),
- die Datenverarbeitungsvorrichtung (228, 328) mindestens ein Speichermodul (234, 334) umfasst, eingerichtet zum Speichern des empfangenen Einfahrtdatensatzes in einer Datenbank (268, 368) des Parksystems (222, 322), und
- die Datenverarbeitungsvorrichtung (228, 328) insbesondere mindestens ein erstes Kommunikationsmodul (230, 330) umfasst, eingerichtet zum Empfangen des Parkdatensatzes.

14. Verfahren, insbesondere computerimplementiertes Verfahren, zum Betreiben eines Parkautomaten (100, 200, 300), insbesondere eines Parkautomaten (100, 200, 300) nach einem der vorherigen Ansprüche 1 bis 11, umfassend:
- Detektieren, durch mindestens ein Detektionsmodul (110, 210, 310) des Parkautomaten (100, 200, 300), eines Ausführbarkeitsfehlers des Parkautomaten (100, 200, 300) bei einem Ausführen von Parkbezahlanfragen, und
- Bewirken, durch mindestens ein Generierungsmodul (112, 212, 312) des Parkautomaten (100, 200, 300), eines Ausgebens eines durch ein mobiles Endgerät (246, 346) auslesbaren Kommunikationsdatensatzes, wenn ein Ausführbarkeitsfehler des Parkautomaten (100, 200, 300) bei dem Ausführen der Parkbezahlanfrage detektiert wird,
- wobei der auslesbare Kommunikationsdatensatz mindestens ein Instruktionsdatum für das mobile Endgerät (246, 346) zum Ausführen eines Bezahlvorgangs mit einer Datenverarbeitungsvorrichtung (228, 328) und/oder mit einer mit der Datenverarbeitungsvorrichtung (228, 328) verbindbaren Rechenvorrichtung (380) unabhängig von dem Parkautomaten (100, 200, 300) enthält.

15. Computerprogramm, umfassend Befehle, die bei der Ausführung des Computerprogramms durch mindestens einen Prozessor (102, 202, 302) eines Parkautomaten (100, 200, 300) diesen veranlassen, das Verfahren nach Anspruch 14 auszuführen und/oder zu steuern.
